(19) Europäisches Patentamt
European Patent Office
Office européen des brevets

(11) **EP 2 479 477 A1**

(12) **EUROPEAN PATENT APPLICATION**
published in accordance with Art. 153(4) EPC

(43) Date of publication:
**25.07.2012 Bulletin 2012/30**

(51) Int Cl.:
**F21S 2/00** (2006.01)      **G02F 1/13357** (2006.01)
**F21Y 103/00** (2006.01)

(21) Application number: **10817008.5**

(22) Date of filing: **19.08.2010**

(86) International application number:
**PCT/JP2010/063977**

(87) International publication number:
**WO 2011/033895 (24.03.2011 Gazette 2011/12)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **16.09.2009 JP 2009215036**

(71) Applicant: **Sharp Kabushiki Kaisha
Osaka-shi, Osaka 545-8522 (JP)**

(72) Inventors:
• **KUROMIZU, Yasumori**
  **OSAKA 545-8522 (JP)**
• **NAKAMURA, Mayumi**
  **OSAKA 545-8522 (JP)**

(74) Representative: **Müller-Boré & Partner
Patentanwälte
Grafinger Straße 2
81671 München (DE)**

(54) **LIGHTING DEVICE, DISPLAY APPARATUS, AND TELEVISION RECEIVER**

(57)    An object of the invention is to reduce uneven brightness in a backlight unit. A backlight unit 12 includes a hot cathode tube 17, a chassis 14, a diffuser plate 30, and a reflection sheet 20. The chassis 14 includes a bottom plate 14a disposed on a side opposite to a light output side of the hot cathode tube 17 and houses the hot cathode tube 17. The diffuser plate 30 included in an optical member 15 is disposed more to the light output side than the hot cathode tube 17. The reflection sheet 20 is configured to reflect light and disposed in the chassis 14.

The reflection sheet 20 includes rising portions 20b rising from a side close to the bottom plate 14a toward a side close to the diffuser plate 30 configured to reflect light. The rising portions 20b rise stepwise and include at least first rising sections 25 with base ends on the bottom plate 14a and second rising sections 26 with distal ends reaching the diffuser plate 30. Each second rising section 26 and the diffuser plate 30 form an angle θ2 larger than an angle θ1 between each first rising section 25 and the bottom plate 14a.

FIG.6

**Description**

TECHNICAL FIELD

The invention relates to a lighting device, a display device and a television receiver.

BACKGROUND ART

Liquid crystal panels for use in liquid crystal display devices such as a liquid crystal television set, for example, do not emit light by themselves and therefore need backlight units as separate lighting devices. The backlight units are well known for being mounted on a back surface of a liquid crystal panel (opposite to a display surface) and are configured to include a chassis having an opening on the surface opposite to the liquid crystal panel; a large number of light sources (for example, cold cathode tubes) stored as lamps in the chassis; an optical member (diffuser plate or the like) that is disposed in the opening of the chassis and emit efficiently light from the light sources toward the liquid crystal panel; and a reflection sheet that is laid in the chassis and reflects the light from the light sources toward the optical member and the liquid crystal panel. In addition, as an example of this kind of a backlight unit, there is a well-known backlight unit disclosed in Patent Document 1 shown below.
Patent Document 1: Japanese Unexamined Patent Publication No. 2006-146126

Problem to be Solved by the Invention

The reflection sheet constituting the foregoing backlight unit includes a bottom portion disposed along an inner surface of a bottom plate of the chassis and rising portions rising from the bottom portion toward the optical member, and is configured to direct reflected light toward a center of a screen by the rising portions.
In this arrangement, if angles between the rising portions and the bottom plate and the optical member are set smaller, space held between a distal ends of the rising portions and the optical member tends to be narrower, which makes light less prone to enter the narrow space. Accordingly, there is a tendency to be lack in quantity of light to be supplied to parts of the optical member corresponding to the distal ends and their proximities of the rising portions, thereby resulting in local dark sections.
Meanwhile, if the angles between the rising portions and the bottom plate and the optical member are set larger, sufficient space can be provided between the distal end parts and the optical member, but the range of formation of the rising portions in a planar view becomes narrower, and the range of formation of the bottom portion becomes larger in the reflection sheet. At the bottom portion, the length of a light path in which reflected light reaches the optical member becomes larger than the rising portions, and therefore the efficiency of supply of light to the optical member is relatively low. Accordingly, when the range of formation of the bottom portion becomes larger as described above, supply quantity of light is prone to be insufficient at several parts of the optical member. In particular, there is a fear that local dark sections are generated at parts of the optical member corresponding to the base ends and their proximities of the rising portions. In either case, non-uniform quantity of light is supplied to the optical member and the non-uniformity may be recognized as unevenness.

DISCLOSURE OF THE INVENTION

The present invention was made in view of the foregoing circumstances. An object of the present invention is to reduce uneven brightness in a lighting device.

Means for Solving the Problem

A lighting device of the invention includes a light source, a chassis, an optical member, and a reflection member. The chassis includes a bottom plate disposed on a side opposite to a light output side with respect to the light source, and stores the light source. The optical member is disposed on the light incident side with respect to the light source. The reflection member is disposed in the chassis. The reflection member includes a rising portion rising from a side close to the bottom plate toward a side closer to the optical member and configured to reflect light. The rising portion is formed to rise stepwise and includes at least a first rising section and a second rising section. The first rising section includes a base end on the bottom plate. The second rising section a distal end reaching the optical member. The second rising section and the optical member form an angle larger than an angle between the first rising section and the bottom plate.
Accordingly, light reflected on the rising portion of the reflection member reaches the optical member in a shorter light path, thereby making it possible to efficiently direct light to the optical member. With the rising portion formed to rise stepwise, an even amount of light is directed to an entire surface of the optical member. The first rising section, the base end of which is on the bottom plate, and the second rising section, the distal end of which reaches the optical member, are formed as follows.

The angle between the second rising section and the optical member is larger than the angle between the first rising section and the bottom plate. With this configuration, a larger space is provided between the distal end of the second rising section and the optical member in comparison to a configuration in which an angle between the second rising section and the optical member is equal to or smaller than an angle between the first rising section and the bottom plate. Therefore, light is more easily to enter between the distal end of the second rising section and the optical member. A sufficient amount of light can be achieved. Accordingly, dark spots are less likely to appear in areas of the optical member around the distal end of the second rising section.

The angle between the first rising section and the bottom plate is smaller than the angle between the second rising section and the optical member. Therefore, the first rising section can be formed in a larger area in comparison to a configuration in which the angle between the first rising section and the bottom plate is equal to or larger than the angle between the second rising section and the optical member. Therefore, light is efficiently directed to the optical member by the first rising section formed in the sufficiently large area. As a result, unevenness is less likely to occur in amount of light directed to the optical member. Accordingly, dark spots are less likely to appear in areas of the optical member around the base end of the first rising section. With the above configuration, an even amount of light is directed to an entire surface of the optical member.

The following configuration may be preferable as embodiments of the present invention.

(1) The distal end of the first rising section and the base end of the second rising section are connected to each other. Accordingly, the rising portion rises in two steps and thus a shape of the reflection member is less likely to be complicated in comparison to a configuration in which the rising portion rises in three or more steps. Therefore, this configuration is preferred for reducing manufacture costs of the reflection member and keeping the shape of the rising portion.

(2) The chassis has an area opposed to the optical member, which includes a light source arranged region where the light source is disposed and a light source non-arranged region where the light source is not disposed. At least the second rising section of the rising portion is disposed in the light source non-arranged region. The amount of light inside the chassis may be relatively smaller in the light source non-arranged region in comparison to the amount of light in the light source arranged region. By arranging the second rising section in the light source non-arranged region, sufficiently large space is provided between the second rising section and the optical member. Therefore, light is directed to the space. With the above configuration, the sufficient amount of light is directed to the optical member even in the light source non-arranged region where the amount of light tends to be small.

(3) The reflection member has a bottom portion disposed along the bottom plate and at least partly located in the light source arranged region. The first rising section rises from the bottom portion toward the optical member. A part of the reflection member corresponding to the light source arranged region is located between the light source and the bottom plate of the chassis. Therefore, the part may be an obstacle to the light source during installation of the light source if a shape of the part is complex. According to the invention, only a part of the bottom portion on the reflection member disposed along the bottom plate is located in the light source arranged region. Therefore, the reflection member is less likely to become an obstacle during installation of the light source.

(4) The base end of the first rising section rising from the bottom portion is located in the light source non-arranged region. The bottom portion is disposed over the entire light source arranged region and thus the reflection member is further less likely to become an obstacle during installation of the light source. Furthermore, the entire rising portion including the first rising section is disposed in the light source non-arranged region. Light in the light source non-arranged region, in which the amount of light inside the chassis tends to be small in comparison to the amount of light in the light source arranged region, is reflected by the rising portion. Therefore, the sufficient amount of light is directed to the area of the optical member overlapping the light source non-arranged.

(5) The light source has a light-emitting surface for emitting light. The bottom portion is disposed so as to be opposed to the light-emitting surface. Accordingly, light from the light-emitting surface of the light source is reflected by the bottom portion disposed in the entire light source arranged region to the optical member. If the base end position of the first rising section is located in the light source arranged region, the space between the first rising section and the light source becomes small, and thus the light reflected in the light source arranged region is more likely to directly return to the light source. According to the present invention, the bottom portion is disposed over the entire light source arranged region and sufficient space is provided between the bottom portion and the light source. Accordingly, light reflected by the bottom portion in the light source arranged region is less likely to directly return to the light source. Therefore, light use efficiency can be maintained at high level.

(6) The first rising section and the second rising section are formed such that space between the first rising section and the optical member and space between second rising section and the optical member decreases as distances from the light source increases. The amount of light inside the chassis tends to decrease as a distance from the light source increases. By reducing the space between the first rising section and the optical member and the space between the second rising section and the optical member as the distances from the light source increases, the length of a light path from each of the rising sections to the optical member tends to be proportional to the amount of light inside the chassis. Light can be more efficiently guided to the optical member as the length of the light path decreases. With the rising portion having the above configuration, light can be evenly guided to the optical member.

(7) The first rising section and the second rising section are sloped. With the first rising section and the second rising section, light is efficiently and evenly guided to the optical member.

(8) The angle between the first rising section and the bottom plate is an acute angle. The angle between the second rising section and the optical member is also an acute angle. Light reflected by the first rising section is angled in accordance with the angle between the first rising section and the bottom plate. Light reflected by the second rising section is angled in accordance with the angle between the second rising section and the optical member. Because of the acute angles, light is efficiently guided to the optical member.

(9) The first rising section is sloped such that the space between the first rising section and the optical member decreases as the distance from the light source increases. The angle between the first rising section and the bottom plate is an acute angle, and the angle between the second rising section and the optical member is a substantially right angle. An amount of light inside the chassis tends to decreases as a distance from the light source increases. By reducing the space between the first rising section and the optical member as the distance from the light source increases, the length of a light path from the first rising section to the optical member tends to be proportional to the amount of light inside the chassis. Light can be more efficiently guided to the optical member as the length of the light path decreases, light can be evenly guided to the optical member by the first rising section. Furthermore, the first rising section is sloped so as to form an acute angle with the bottom plate. Therefore, light is efficiently guided to the optical member. The second rising section rises from the distal end of the first rising section at the substantially right angle toward the optical member. A distance between the distal end of the first rising section and the optical member is longer than the length of the second rising portion. Accordingly, dark spots are less likely to appear in areas of the optical member around the distal end of the second rising section.

(10) The chassis has a rectangular shape in a planar view, and the light source extends along a long side of the chassis. The light source arranged region and the light source non-arranged region are aligned along a shorter side of the chassis. This configuration is suitable for a lighting device including a linear light source.

(11) The reflection member has a white surface. With the white surface, light is efficiently reflected by the reflection member.

(12) The reflection member is a reflection sheet provided separately from the chassis and placed in the chassis. A material for the reflection sheet can be flexibly selected.

(13) The reflection sheet is made of foamed PET. Therefore, the reflection sheet can be provided with lightweight and high formability.

(14) The lighting device further includes a holddown member. The reflection sheet has a bottom portion along the bottom plate. The holddown member is arranged so as to cross the bottom portion and at least the first rising section of the rising portion. The holddown has a pressing surface that presses the bottom portion and at least the first rising section of the rising portion from the optical member side. The rising portion of the reflection sheet rises from the bottom portion toward the optical member. A shape of the rising portion tends to vary due to variations in the angle relative to the bottom portion or due to deformation including warpage and deflection. According to the present invention, the holddown member has the pressing surface that crosses the bottom portion of the reflection sheet and at least the first rising section of the rising portion. Moreover, the pressing surface presses the bottom portion and at least the first rising section of the rising portion from the optical member side. Therefore, displacement of the rising portion toward the optical member is restricted. The angle between the rising portion and the bottom portion is less likely to vary and deformation of the rising portion including warpage or flexure is less likely to occur. Since the shape of the rising portion can be maintained, the direction of reflected light by the rising portion is stable. Unevenness of light emitted from the lighting device is less likely to occur.

(15) The reflection sheet has a bottom portion along the bottom plate. The chassis further includes a side plate rising from an edge of the edge of the bottom plate toward the optical member, and a receiving plate jutting outward from a distal end of the side plate. The second rising section has an extending portion extending along the receiving plate. Accordingly, the bottom portion of the reflection sheet is disposed along the bottom plate and the extending portion is disposed along the receiving plate. This makes a shape of the rising portion between the bottom portion and the extending portion stable.

(16) The lighting device further includes a support member supporting the rising portion from the bottom plate side. The support member is arranged between the bottom plate and the rising portion. The rising portion of the reflection sheet rises from the bottom plate toward the optical member. The shape of the rising portion of the reflection sheet tends to vary due to variations in the angle relative to the bottom plate or deformation including warpage and deflection. According to the invention, the rising portion is supported by the support member from the bottom plate side. Therefore, displacement of the rising portion toward the bottom plate is less likely to occur. The angle between the rising portion and the bottom plate is less likely to vary and deformation of the rising portion including warpage and deflection is less likely to occur. Since the shape of the rising portion is maintained, the direction of reflected light by the rising portion is stable. Therefore, unevenness in light emitted from the lighting device is less likely to occur.

(17) The reflection member is integrally provided with the chassis. With this configuration, the number of parts and assembly time can be reduced.

(18) The chassis is made of polycarbonate. This is advantageous in setting high light reflectance on the surface of the chassis.

(19) The chassis has an area opposed to the optical member, which includes the light source arranged region where the light source is disposed and the light source non-arranged region where the light source is not disposed. The optical member includes an area overlapping the light source arranged region and an area overlapping the light source non-arranged region. At least a surface of the optical member opposed to the light source in the area overlapping the light source arranged region has light reflectance higher than that of at least a surface of the optical member opposed to the light source in the area overlapping the light source non-arranged region. The base end of the second rising section is arranged so as to overlap an area of the optical member having light reflectance in a range expressed by inequality (1), where Rmax is a maximum value of the light reflectance of the surface of the optical member opposed to the light source, Rmin is a minimum value of the light reflectance of the surface of the optical member opposed to the light source, and Ra is the light reflectance of the area of the optical member.

$$(Rmax - Rmin)/2 + Rmin > Ra \quad ... \quad Inequality \ (1)$$

Light emitted from the light source first reaches a part of the optical member having a relatively high light reflectance. Most of the light is reflected (that is, not transmitted therethrough). The amount of light used for illumination is lower than that of light emitted from the light source. The reflected light is further reflected by the reflection member inside the chassis to the light source non-arranged region. The area of the optical member overlapping the light source non-arranged region has relatively small light reflectance, and therefore a larger amount of light is transmitted therethrough and thus predetermined brightness in light used for illumination is achieved.

When the light reflectance of the optical member is set as described above, a relatively even amount of light is provided inside the chassis. Nevertheless, it is difficult to make the amount completely even. The amount of light in the light source non-arranged region tends to be smaller than that in the light source arranged region. Therefore, the optical member tends to receive a relatively smaller amount of light in the area of the optical member having light reflectance Ra in the range expressed by inequality (1) than in the area of the optical member having light reflectance out of the range expressed by inequality (1).

The entire second rising section is arranged so as to overlap the area of the optical member having the light reflectance Ra in the range expressed by inequality (1) . Therefore, sufficiently large space is provided between the distal end of the second rising section and the area of the optical member having the light reflectance Ra in the range expressed by inequality (1) . Furthermore, light is more easily directed to the space. With the above configuration, differences in amounts of light received by the optical member in the area having the light reflectance Ra in the range expressed by inequality (1) and in the area having the light reflectance out of the range expressed by inequality (1) can be compensated.

(20) The distal end of the first rising section is arranged so as to overlap an area of the optical member having light reflectance in the range expressed by inequality (1). Furthermore, the base end of the first rising section is arranged so as to overlap an area of the optical member having light reflectance in a range expressed by inequality (2), where Rb is the light reflectance of the area of the optical member with which the base end of the first rising section overlaps.

$$(Rmax - Rmin)/2 + Rmin < Rb \quad ... \quad Inequality \ (2)$$

Accordingly, the first rising section crosses a boundary between the area having light reflectance Ra in the range expressed by inequality (1) and the area having light reflectance Rb in the range expressed by inequality (2). If the base end of the first rising section is arranged so as to overlap the area having light reflectance Ra expressed by inequality (1), the first rising section is not located at the boundary between the area having light reflectance Ra expressed by inequality (1) and the area having light reflectance Rb expressed by inequality (2). Therefore, the amount of light directed to the optical member is locally decreased around the boundary and thus dark spots may appear around the boundary. According to the present invention, light is efficiently guided to the optical member even around the boundary by the first rising section, and the amount of light directed to the optical member is less likely to locally be reduced. With the above configuration, differences in amounts of light received by the optical member in the area having the light reflectance Ra in the range expressed by inequality (1) and in the area having the light reflectance in the range expressed by inequality (2) can be compensated.

(21) The chassis has an area opposed to the optical member, which includes at least a first end section, a second end section arranged opposite to the first end section, and a central section between the first end section and the second end section. The central section is a light source arranged region where the light source is disposed, and the first end section and the second end section are light source non-arranged regions where the light source is not disposed. The optical member includes an area overlapping the light source arranged region and an area overlapping the light source non-arranged area. At least a surface of the optical member opposed to the light source in the area overlapping the light source arranged area has light reflectance higher than that of at least a surface of the optical member opposed to the light source in the area overlapping the light source non-arranged area. Light emitted from the light source first reaches a part of the optical member having relatively high light reflectance, namely, most of the light is reflected (that is, not transmitted through the optical member). Therefore, the amount of light used for illumination is smaller than that of light emitted from the light source. The reflected light is further reflected by the reflection member inside the chassis to the light source non-arranged region. Since the part of the optical member overlapping the light source non-arranged region has relatively small light reflectance, a larger amount of light is transmitted therethrough. Therefore, predetermined brightness in the illumination light can be achieved. According to the present invention, the central section corresponds to the light source arranged region. The first end section and the second end section correspond to the light source non-arranged regions. Therefore, sufficient brightness can be achieved in the central area of the lighting device. As a result, proper brightness can be achieved in the central display area of a display device including the lighting device. Therefore, the display device can be provided with good visibility.

(22) The rising portion is arranged close to each of the first end section and the second end section. By arranging the rising portion close to each of the first end section and the second end section, which is the light source non-arrange region in which the amount of light tends to be small, light is more efficiently guided to the optical member.

(23) The light reflectance of at least the surface of the optical member opposed to the light source decreases as a distance from the light source increases. With this configuration, a distribution of brightness of light output from the optical member and used for illumination gently changes from the area overlapping the light source arranged region to the area overlapping the light source non-arranged region.

(24) The surface of the optical member opposed to the light source has a light reflecting portion configured to reflect light. With this configuration, light reflectance of the surface of the optical member on the light source side can be properly controlled in accordance with the configuration of the light reflecting portion.

(25) The light reflecting portion includes a large number of light reflective dots arranged within the surface of the optical member close to the light source. Each of the light reflective dots has a substantially round shape. With this configuration, the light reflectance can be easily controlled in accordance with the configurations of the dots (such as areas and distribution density).

(26) The light source is a hot cathode tube. With this configuration, high brightness can be achieved.

(27) The light source is a cold cathode tube. With this configuration, a longer lifetime can be achieved, and the brightness of light can be easily controlled.

(28) The light source is a LED. With this configuration, a longer lifetime and lower power consumption can be achieved.

Next, to solve the foregoing problem, the display device of the invention includes the lighting device described above and a display panel configured to provide display using light from the lighting device.

According to the display device, the lighting device supplying light to the display panel is less likely to produce uneven brightness. Therefore, the display device can provide high display quality.

The display panel may be a liquid crystal panel. This display device can be used as a liquid crystal display device in various applications, for example, displays for televisions, personal computers, and especially suitable for large screen displays.

Advantageous Effect of the Invention

According to the invention, it is possible to suppress occurrence of brightness unevenness.

BRIEF DESCRIPTION OF THE DRAWINGS

FIG. 1 is an exploded perspective view showing a schematic configuration of a television receiver according to a first embodiment of the invention;
FIG. 2 is an exploded perspective view showing a schematic configuration of a liquid crystal display device included in the television receiver;
FIG. 3 is a cross section view of the liquid crystal display device along a shorter side;
FIG. 4 is a cross section view of the liquid crystal display device along a longer side;
FIG. 5 is a plane view of layout of a hot cathode tube and a reflection sheet in a chassis included in the liquid crystal display device;
FIG. 6 is an enlarged cross section view of main components of FIG. 3;
FIG. 7 is a plane view for illustrating distribution of light reflectance in a diffuser plate;
FIG. 8 is an enlarged plane view of main components showing a schematic configuration of a surface of the diffuser plate opposed to the hot cathode tube;
FIG. 9 is a graph showing changes in light reflectance on the diffuser plate along a shorter side;
FIG. 10 is a graph showing changes in light reflectance on the diffuser plate along a longer side;
FIG. 11 is a graph showing distribution of brightness of light emitted from the diffuser plate along a Y-axis direction using a reflection sheet, according to an example and a comparative example;
FIG. 12 is a cross section view of the liquid crystal display device along a shorter side using the reflection sheet according to modification example 1 of the first embodiment;
FIG. 13 is a cross section view of the liquid crystal display device along a shorter side using the reflection sheet according to modification example 2 of the first embodiment;
FIG. 14 is a graph showing changes in light reflectance on the diffuser plate along a shorter side according to modification example 3 of the first embodiment;
FIG. 15 is a graph showing changes in light reflectance on the diffuser plate along a shorter side according to modification example 4 of the first embodiment;
FIG. 16 is a plane view of layout of a hot cathode tube, a reflection sheet, and holddown members in a chassis according to a second embodiment of the invention;
FIG. 17 is a cross section view of FIG. 16 taken along line xvii-xvii;
FIG. 18 is a plane view of layout of a hot cathode tube and a reflection sheet in a chassis according to a third embodiment of the invention;
FIG. 19 is a cross section view of FIG. 18 taken along line xix-xix;
FIG. 20 is a plane view of layout of a hot cathode tube and a reflection sheet in a chassis according to a fourth embodiment of the invention;
FIG. 21 is a cross section view of FIG. 20 taken along line xxi-xxi;
FIG. 22 is a cross section view of FIG. 20 taken along line xxii-xxii;
FIG. 23 is a plane view of layout of cold cathode tubes, light source holding members, and a reflection sheet in a chassis according to a fifth embodiment of the invention;
FIG. 24 is a cross section view of FIG. 23 taken along line xxiv-xxiv;
FIG. 25 is a plane view of layout of LEDs and a reflection sheet in a chassis according to a sixth embodiment of the invention;
FIG. 26 is a cross section view of FIG. 25 taken along line xxvi-xxvi;
FIG. 27 is a plane view of layout of a hot cathode tube and a reflection sheet in a chassis according to modification example 1 of the sixth embodiment of the invention;
FIG. 28 is a cross section view of FIG. 27 taken along line xxviii-xxviii;
FIG. 29 is a cross section view of FIG. 27 taken along line xxix-xxix;
FIG. 30 is a cross section view of a liquid crystal display device along a shorter side using a reflection sheet according to a seventh embodiment of the invention; and
FIG. 31 is a cross section view of a liquid crystal display device along a shorter side according to an eighth embodiment of the invention.

BEST MODE FOR CARRYING OUT THE INVENTION

<First embodiment>

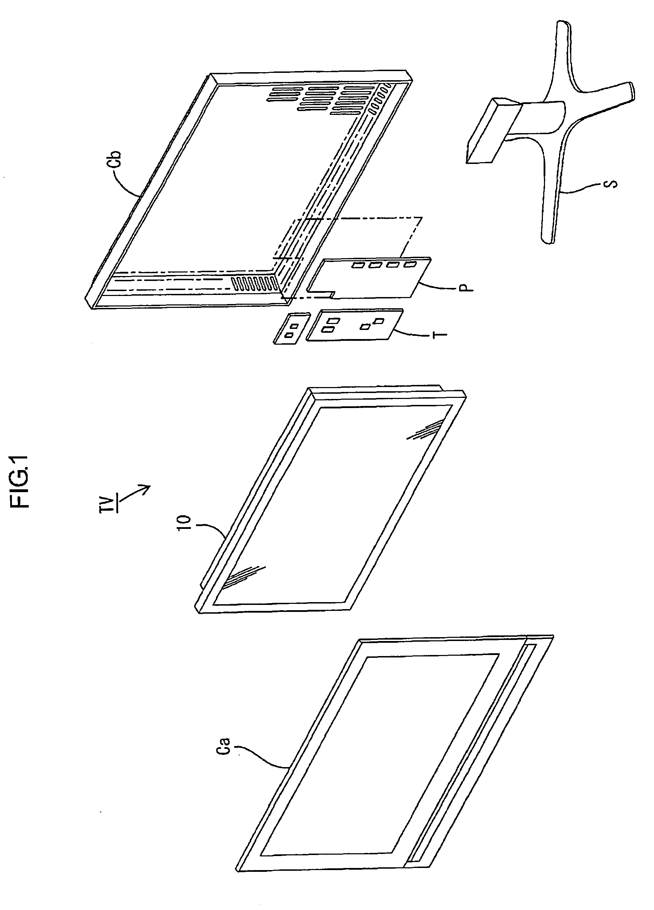

A first embodiment of the invention will be described with reference to FIGS. 1 to 11. First, a configuration of a television receiver TV including a liquid crystal display device 10 will be explained.

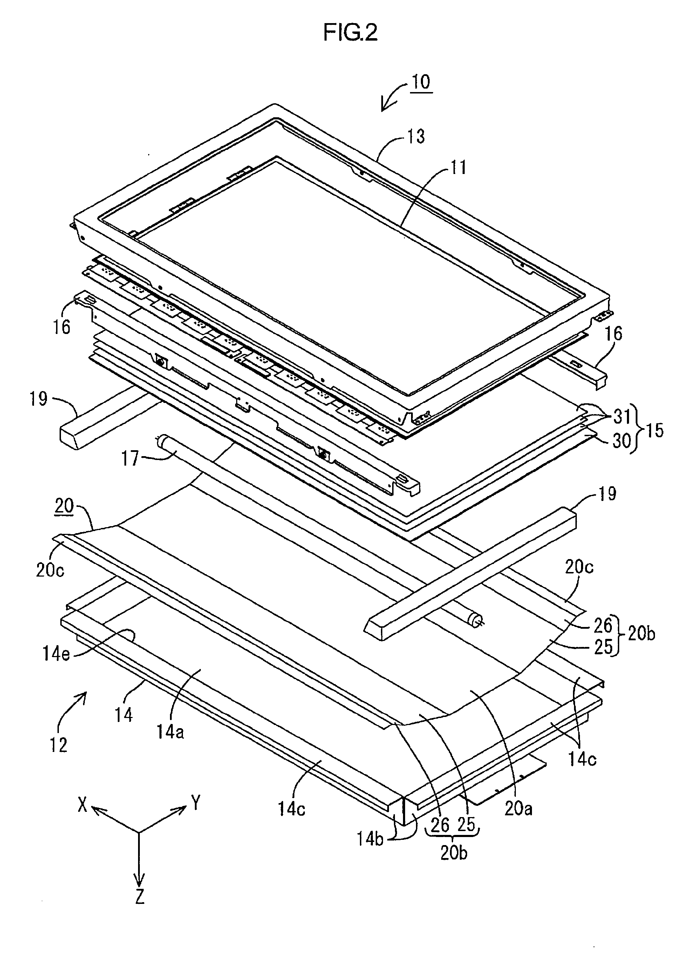

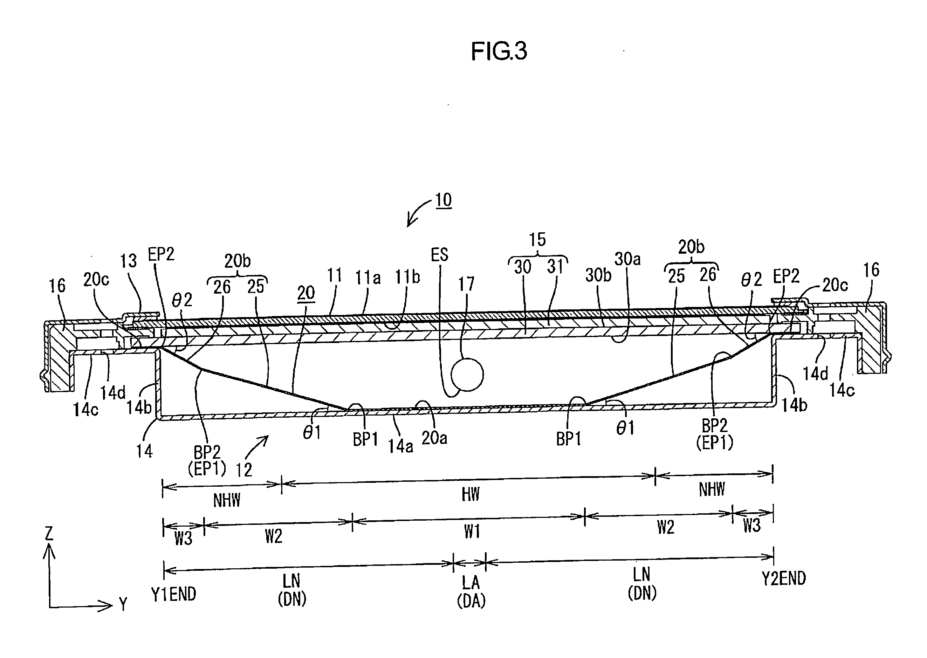

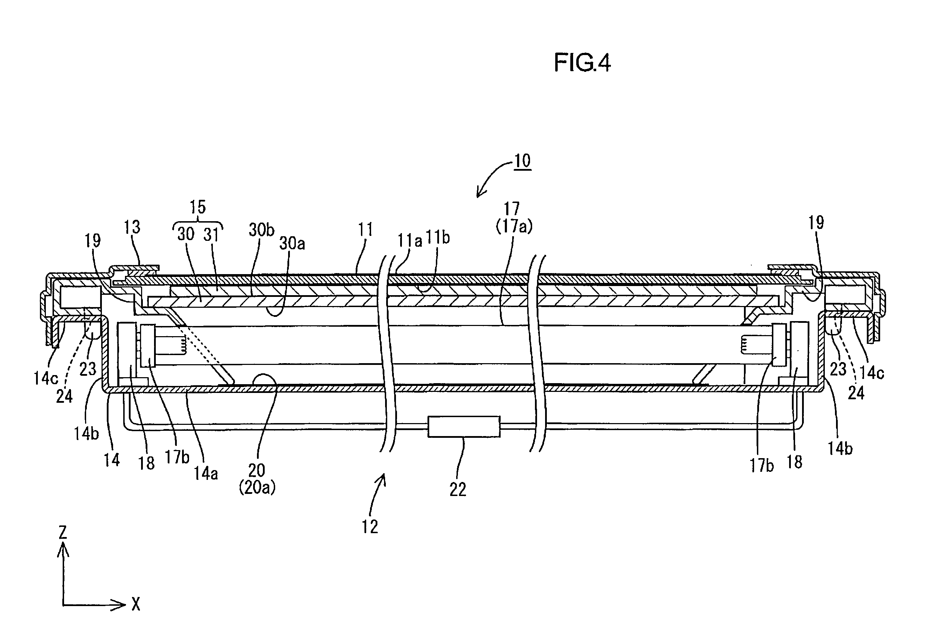

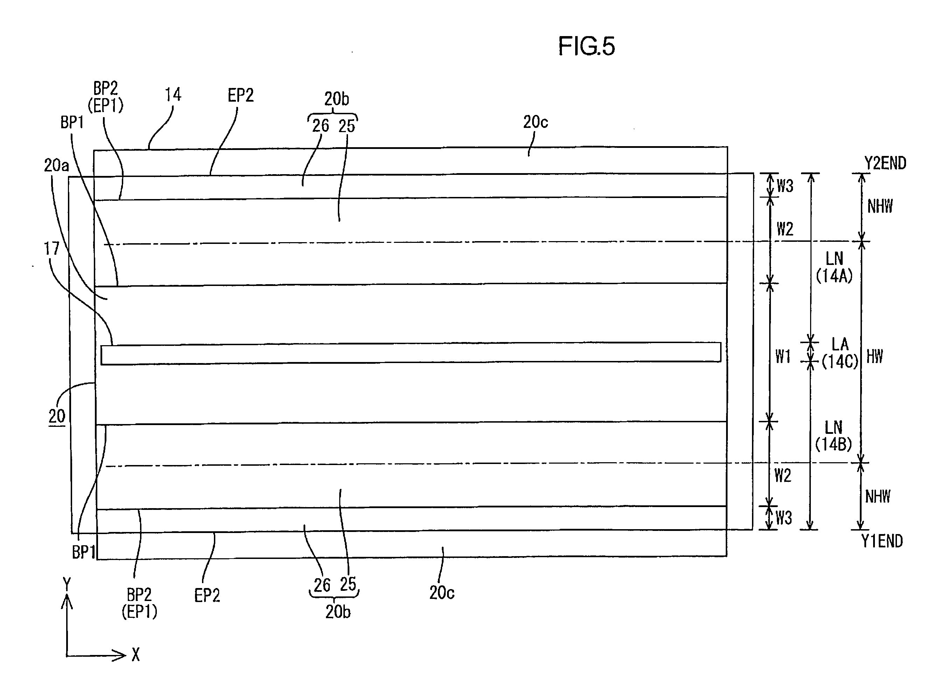

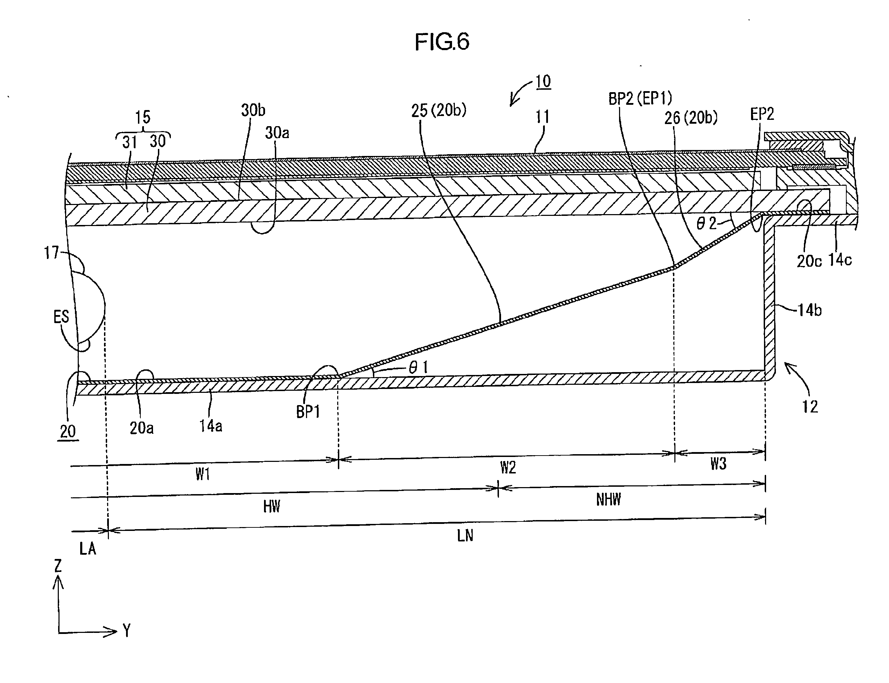

FIG. 1 is a is an exploded perspective view showing a schematic configuration of a television receiver according to the first embodiment of the invention, FIG. 2 is an exploded perspective view showing a schematic configuration of a liquid crystal display device included in the television receiver of FIG. 1, FIG. 3 is a cross section view of the liquid crystal display device of FIG. 2 along a shorter side, FIG. 4 is a cross section view of the liquid crystal display device of FIG. 2 along a longer side, FIG. 5 is a plane view of layout of a hot cathode tube and a reflection sheet in a chassis included in the liquid crystal display device of FIG. 2, and FIG. 6 is an enlarged cross section view of main components of FIG. 3. In FIG. 5, the chassis has a longer side along an X-axis direction and a shorter side along a Y-axis direction.

The television receiver TV according to the embodiment is configured to include the liquid crystal display device 10; front and back cabinets Ca and Cb sandwiching and storing the liquid crystal display device 10; a power source P; a tuner T; and a stand S, as shown in FIG. 1. The liquid crystal display device (display device) 10 is a horizontally-long box (rectangular and longitudinal) as a whole and is stored in portrait orientation. The liquid crystal display device 10 includes a liquid crystal panel 11 as a display panel and a backlight unit (lighting device) 12, and these components are integrally held by a frame-like bezel 13 or the like, as shown in FIG. 2. In the embodiment, the television receiver TV has a screen size of 32 inches with an aspect ratio of 16:9 as an example. More specifically, the horizontal dimension of the screen (along the X-axis direction) is about 698 mm, for example, and the vertical dimension of the screen (along the Y-axis direction) is about 392 mm, for example.

Next, the liquid crystal panel 11 and the backlight unit 12 constituting the liquid crystal display device 10 will be described (refer to FIGS. 2 to 4).

The liquid crystal panel (display panel) 11 includes a pair of glass substrates attached together with a predetermined gap therebetween and liquid crystal sealed between the glass substrates. One of the glass substrates has a switching component (TFT, for example) connected to a source wiring and a gate wiring orthogonal to each other, pixel electrodes connected to the switching component, an alignment film, and the like. The other glass substrate has color filters in which color sections of R (red), G (green), B (blue), and the like are arranged in predetermined alignment, counter electrodes, an alignment film, and the like. In addition, polarizing plates 11a and 11b are disposed outside the two substrates (refer to FIGS. 3 and 4).

As shown in FIG. 2, the backlight unit 12 includes an approximately box-shaped chassis 14 with an opening 14e on the front side (the light output side and the liquid crystal panel 11 side); an optical member 15 group (a diffuser plate (light diffuser member) 30 and a plurality of optical sheets 31 disposed between the diffuser plate 30 and the liquid crystal panel 11) disposed to cover the opening 14e of the chassis 14; and a frame 16 that is disposed along the longer side of the chassis 14 so as to sandwich and hold a longer side edge portion of the optical member 15 group with the chassis 14. Further, the chassis 14 contains a hot cathode tube 17 as a light source (linear light source); sockets 18 for relaying of electrical connection at end portions of the hot cathode tube 17; and a holder 19 covering collectively the end portions of the hot cathode tube 17 and the sockets 18. Moreover, the chassis 14 has a reflection sheet 20 laid therein for reflection of light. The optical member 15 side of the backlight unit 12, not the hot cathode tube 17 side, constitutes the light output side.

The chassis 14 is made of synthetic resin, and is formed by a bottom plate 14a, side plates 14b rising forward from the end portion of each side of the bottom plate 14a, and receiving plates 14C jutting outward from the distal ends of the side plates 14b, and has an approximately shallow box shape as a whole, as shown in FIGS. 3 and 4. The bottom plate 14a has a rectangular shape (longitudinal) with a longer side and a shorter side aligned to the liquid crystal panel 11 and the optical member 15, and has a range of formation so as to be almost the same in size as the liquid crystal panel 11 and the optical member 15 in a planar view. In addition, the bottom plate 14a has insertion holes for insertion of the sockets 18 at the both ends along the longer side. The side plates 14b are provided in a pair at both end portions of the bottom plate 14a along the longer side and the shorter side, and the side plates 14b rise from the bottom plate 14a at an almost right angle. The receiving plates 14c each are formed at the side plates 14b, and are bent at an almost right angle with respect to the side plates 14b, and are configured to be in parallel to the bottom plate 14a. The outer end portions of the reflection sheet 20 and the optical member 15 are placed on the receiving plates 14c which are configured to receive these components from the back side. In addition, as shown in FIG. 3, the receiving plate 14c has fixed holes 14d through which the bezel 13, the frame 16, the chassis 14, and others, can be integrated by screws or the like, for example.

The reflection sheet 20 is made of synthetic resin (foam PET, for example), and has a surface of a white color excellent in light reflectivity. As shown in FIG. 2, the reflection sheet 20 is laid on the inner surface of the chassis 14 (opposed to the hot cathode tube 17) so as to cover the almost entire surface. The reflection sheet 20 allows light emitted from the hot cathode tube 17 to be reflected toward the optical member 15. The reflection sheet 20 has a rectangular shape (longitudinal) with a longer side and a shorter side aligned to the chassis 14 as a whole, and is made symmetrical along the shorter side. The reflection sheet 20 is configured to have a bottom portion 20a disposed along the bottom plate 14a of the chassis 14; a pair of rising portions 20b rising forward from the end portion of the bottom portion 20a (toward the light output side and the optical member 15 side) ; and a pair of extending portions 20c extending outward from the distal ends of the rising portions 20b (opposite to the bottom portion 20a side). As shown in FIGS. 3 and 5, the bottom portion 20a and the pair of rising portions 20b of the reflection sheet 20 are made almost the same size of the bottom plate 14a of the chassis 14 in a planar view, and superimposed on the bottom plate 14a in a planar view. In other words, the bottom plate 14a of the chassis 14 is formed over an entire area covered by the bottom portion 20a and the pair of rising portions 20b of the reflection sheet 20 in a planar view. Therefore, the bottom plate 14a is formed in a wider area as compared to the case where the bottom plate of the chassis is formed in an area superimposed only on the bottom portion 20a. The bottom plate 14a formed in the sufficiently wide area can be used to mount a component such as an inverter board 22 or attach a wall attachment (not shown) for wall-hanging of the liquid crystal display device 10, or the like, on the back surface thereof.

Specifically, the bottom portion 20a is disposed on the central side of the bottom plate 14a in the chassis 14 along the shorter side in a planar view (at a position superimposed on the central portion 14c), and is configured to be in parallel to the plate surface of the bottom plate 14a. In addition, the bottom portion 20a has a plate surface along the X-axis direction and the Y-axis direction, and is also configured to be in parallel to the plate surface of the optical member 15 (diffuser plate 30) . The bottom portion 20a has a rectangular shape (longitudinal), and has a longer side aligned to the X-axis direction (the longer side of the chassis 14 and the axial direction of the hot cathode tube 17) and a shorter side aligned to the Y-axis direction (the shorter side of the chassis 14). The longer side dimension of the bottom portion 20a is almost the same as the longer side dimension of the bottom plate 14a in the chassis 14, whereas the shorter side dimension of the bottom portion 20a is smaller than the shorter side dimension of the bottom plate 14a. That is, the bottom portion 20a is smaller only in the shorter side than the bottom plate 14a of the chassis 14.

The rising portions 20b are disposed in a pair with the bottom portion 20a therebetween along the shorter side, and are located on the both end sides (at positions superimposed on both end portions 14A and 14B) of the bottom plate 14a in the chassis 14 along the shorter side in a planar view. That is, the pair of the rising portions 20b is configured to rise in opposite directions from the both ends of the bottom portion 20a along the longer side. The rising portions 20b have a rectangular shape (longitudinal) in a planar view and are made the same in the longer and shorter sides as the bottom portion 20a. While the dimension of the longer side of the rising portions 20b is almost the same as the dimension of the longer side of the bottom plate 14a in the chassis 14, the dimension of the shorter side of the rising portions 20b is smaller than the dimension of the shorter side of the bottom plate 14a. That is, the two rising portions 20b are formed smaller only in the shorter side than the bottom plate 14a of the chassis 14. The area of each of the rising portions 20b (the length along the Y-axis direction) is larger than the area of the bottom portion 20a (the length along the Y-axis direction). In addition, the bottom portion 20a of the reflection sheet 20 extends along the inner surface of the bottom plate 14a of the chassis 14 and holds less space between the bottom portion 20a and the bottom plate 14a, whereas the rising portions 20b rise separately from the bottom plate 14a and therefore hold space between the rising portions 20b and the bottom plate 14a. A configuration of the rising portions 20b will be described later in detail.

The extending portions 20c extend outward from the distal ends of the rising portions 20b, and are superimposed on the receiving plates 14c in the chassis 14 in a planar view. The extending portions 20c are in parallel to the plate surface of the bottom portion 20a (the bottom plate 14a and the receiving plates 14c) and are placed on the front surface of the receiving plates 14c. The extending portions 20c are sandwiched between the receiving plates 14c and outer edge portions of the diffuser plate 30.

As shown in FIG. 2, the optical member 15 has a horizontally-long square shape (rectangular) in a planar view, as with the liquid crystal panel 11 and the chassis 14. The optical member 15 intervenes between the liquid crystal panel 11 and the hot cathode tube 17, and is formed by the diffuser plate 30 disposed on the back side (opposite to the hot cathode tube 17 side and the light output side) and an optical sheet 31 disposed on the front side (the liquid crystal panel 11 side and the light output side). The diffuser plate 30 is formed by dispersing a large number of diffusing particles in an almost transparent resin base substrate with a predetermined thickness. The diffuser plate 30 has the function of diffusing transmitted light, and also has the function to reflect light emitted from the hot cathode tube 17 as described later in detail. The optical sheet 31 is formed by a thinner sheet as compared to the diffuser plate 30, and has a three-layered structure. Specifically, the optical sheet 31 has a diffuser sheet, a lens sheet, and a reflection-type polarizing sheet in this order from the diffuser plate 30 side (back side).

The hot cathode tube 17 is tubular (linear) as a whole, and includes a hollow glass tube 17a and a pair of electrodes 17b disposed on both end portions of the glass tube 17a, as shown in FIGS. 3 and 4. The glass tube 17a has mercury and rare gas or the like encapsulated therein and has a fluorescent material coating an inner wall surface thereof. Light-emitting surface ES of the hot cathode tube 17 is configured to constitute an outer circumferential surface of the glass tube 17a and emit light radially from an axial center thereof. Each of the electrodes 17b includes a filament and a pair of terminals connected to both end portions of the filament. The hot cathode tube 17 has sockets 18 fitted over the both end portions thereof. The foregoing terminals are connected via the sockets 18 to the inverter board 22 attached to the outer surface (back side) of the bottom plate 14a in the chassis 14. The hot cathode tube 17 is supplied with drive power from the inverter board 22, and is configured to control a tube current value, that is, brightness (lighting status) by the inverter board 22. The hot cathode tube 17 intervenes between the diffuser plate 30 and the bottom plate 14a (reflection sheet 20) of the chassis 14, and is disposed closer to the bottom plate 14a of the chassis 14 than the diffuser plate 30. The outer diameter of the hot cathode tube 17 is larger than the outer diameter of a cold cathode tube (about 4 mm, for example), and is about 15.5 mm, for example.

The thus structured hot cathode tube 17 is stored by only one in the chassis 14 such that the length (along an axial direction) of the hot cathode tube 17 is aligned to the longer side of the chassis 14, and is positioned at an approximately center of the chassis 14 along the shorter side, as shown in FIG. 5. Specifically, assuming that the bottom plate 14a of the chassis 14 (the part opposed to the optical member 15 and the hot cathode tube 17) is divided into the first end portion 14A along the shorter side (along the Y-axis direction), the second end portion 14B positioned opposite to the first end portion 14A, and a central portion 14C sandwiched between the first and second end portions, the hot cathode tube 17 is located at the central portion 14C, thereby to form a light source arranged region LA. Meanwhile, the hot cathode tube 17 is not placed at the first end portion 14A or the second end portion 14B of the bottom plate 14a, thereby to form light source non-arranged regions LN. That is, the hot cathode tube 17 forms the light source arranged region LA eccentrically located at the central portion 14C of the bottom plate 14a of the chassis 14 along the shorter side, and the area of the light source arranged region LA (the length along the Y-axis direction) is smaller than the area of the light source non-arranged regions LN (the length along the Y-axis direction). The ratio of the area of the light source arranged region LA (the length along the Y-axis direction) to the area of the entire screen (the vertical dimension of the screen (shorter side dimension)) is about 4%, for example. In addition, the light source non-arranged regions LN in a pair have almost the same area.

Part of the bottom portion 20a of the reflection sheet 20 (specifically, the central portion along the shorter side) in a planar view is superimposed on the central portion 14C of the chassis 14 (light source arranged region LA), whereas parts of the bottom portion 20a of the reflection sheet 20 (specifically, the both end portions along the shorter side) and the rising portions 20b are superimposed on the first end portion 14A and the second end portion 14B (light source non-arranged regions LN) in a planar view. That is, the main part of the bottom portion 20a is disposed in the light source arranged region LA, whereas the partial ends of the bottom portion 20a and the entire rising portions 20b are disposed in the light source non-arranged regions LN. In addition, the hot cathode tube 17 is formed such that the length thereof is almost equal to the horizontal dimension (longer side dimension) of the screen.

Holders 19 covering the end portions of the hot cathode tube 17 and the sockets 18, are made of white-colored synthetic resin. As shown in FIG. 2, the holders 19 each have a long and narrow, approximately box-like shape extending along the shorter side of the chassis 14. As shown in FIG. 4, the holders 19 each have a stepped front surface on which the optical member 15 and the liquid crystal panel 11 can be placed in different levels, and are partially superimposed on the receiving plates 14c of the chassis 14 along the shorter side, thereby to form side walls of the backlight unit 12 together with the receiving plates 14c. The holders 19 have insertion pins 23 protruding from surfaces opposed to the receiving plates 14c of the chassis 14, and when the insertion pins 23 are inserted into insertion holes 24 in upper surfaces of the receiving plates 14c of the chassis 14, the holders 19 are attached to the chassis 14.

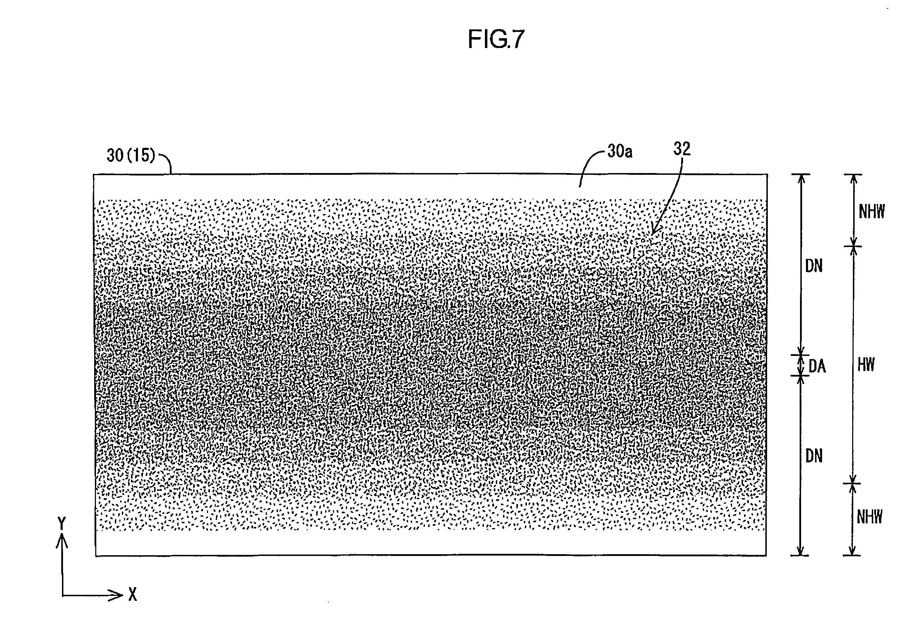

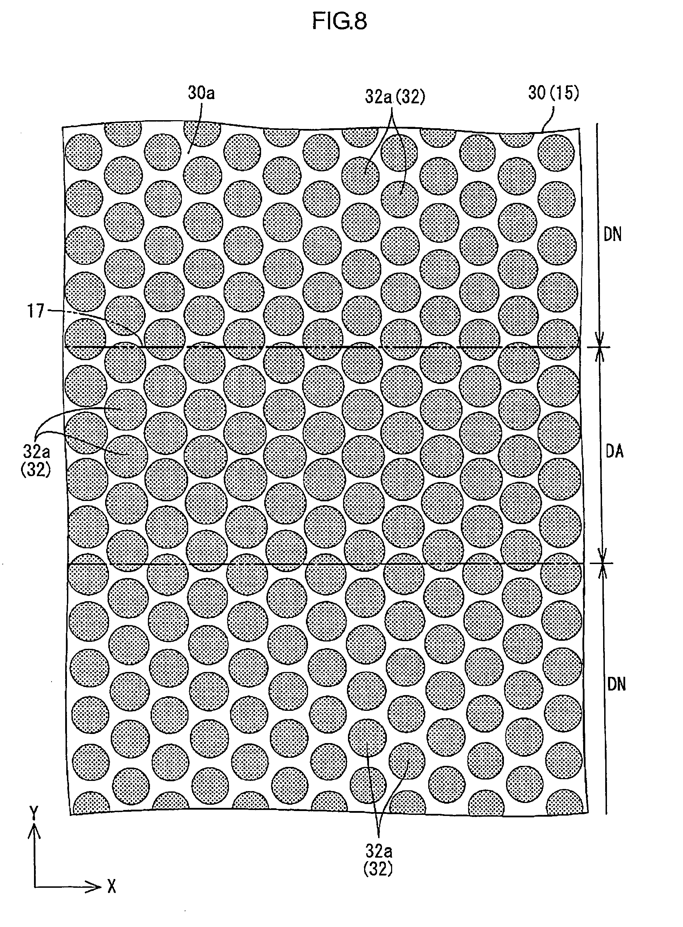

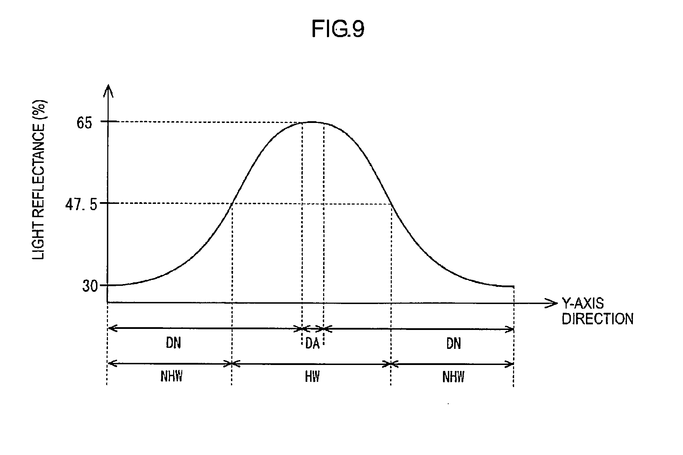

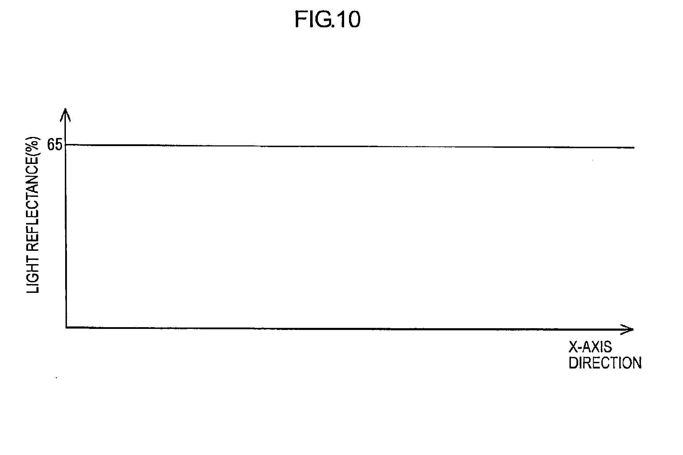

Next, a configuration of the diffuser plate 30 in relation to a light reflecting feature will be described in detail. FIG. 7 is a plane view for illustrating distribution of light reflectance in a diffuser plate, FIG. 8 is an enlarged plane view of main components showing a schematic configuration of a surface of the diffuser plate of FIG. 7 opposed to the hot cathode tube, FIG. 9 is a graph showing changes in light reflectance on the diffuser plate of FIG. 7 along a shorter side, and FIG. 10 is a graph showing changes in light reflectance on the diffuser plate of FIG. 7 along a longer side. In FIGS. 9 and 10, the longer side of the diffuser plate is along the X-axis direction, and the shorter side of the same is along the Y-axis direction. FIG. 9 shows a lateral axis indicative of the Y-axis direction (the shorter side) and represents a graph plotting light reflectance along the Y-axis direction from the forward end portion to the backward end portion shown in FIG. 7. Similarly, FIG. 10 shows a lateral axis indicative of the X-axis direction (the longer side) and represents a graph plotting light reflectance along the Y-axis direction from the left end portion to the right end portion shown in FIG. 7.

The diffuser plate 30 is formed by dispersing and mixing a predetermined amount of diffusing particle diffusing light, into an almost transparent base substrate made of synthetic resin (polystyrene, for example), and has almost uniform light transmittance and light reflectance as a whole. Specifically, the light transmittance and light reflectance on the base substrate of the diffuser plate 30 (excluding a light reflecting portion 32 described later) are preferably about 70% and about 30%, respectively, for example. The diffuser plate 30 has a surface opposed to the hot cathode tube 17 (hereinafter, referred to as first plane 30a) and a surface located opposite to the first plane 30a and opposed to the liquid crystal panel 11 (hereinafter, referred to as second plane 30b). The first plane 30a is set as a light incident plane into which light from the hot cathode tube 17 is entered, whereas the second plane 30b is set as a light output plane from which light (illumination light) is output toward the liquid crystal panel 11.

In addition, the white-colored, dot-patterned light reflecting portion 32 is formed on the first plane 30a constituting the light incident plane of the diffuser plate 30, as shown in FIGS. 7 and 8. The light reflecting portion 32 is formed by arranging a plurality of round dots 32a in a zigzag alignment (staggered and alternating manner) in a planar view. The dot pattern of the light reflecting portion 32 is formed by printing a paste containing a metal oxide, for example, on the surface of the diffuser plate 30. The preferred means for the printing is screen printing, ink-jet printing, or the like. The light reflecting portion 32 has a light reflectance of about 75%, for example, which is larger as compared to in-plane light reflectance of about 30% of the diffuser plate 30. In the embodiment, the light reflectance of each material is an average light reflectance in a measurement diameter of the CM-3700d LAV (with a measurement diameter of $\phi$25.4 mm) manufactured by Konica Minolta Holdings, Inc. In addition, the light reflectance on the light reflecting portion 32 is measured in a manner that the light reflecting portion 32 is formed on one entire surface of a glass substrate and the formation surface is measured by the foregoing measurement means.

The diffuser plate 30 has a longer side (along the X-axis direction) and a shorter side (along the Y-axis direction) . When a dot pattern in the light reflecting portion 32 is changed, light reflectance on the first plane 30a opposed to the hot cathode tube 17 of the diffuser plate 30 varies along the shorter side as shown in FIG. 9 (refer to FIG. 7). That is, the diffuser plate 30 is generally configured such that a part of the first plane 30a superimposed on the hot cathode tube 17 (hereinafter, referred to as light source overlapping area DA) has larger light reflectance than parts of the first plane 30a not superimposed on the hot cathode tube 17 (hereinafter, referred to as light source non-overlapping area DN), as shown in FIG. 7. In addition, light reflectance on the first plane 30a of the diffuser plate 30 hardly varies along the longer side and is maintained almost uniform as shown in FIG. 10 (refer to FIG. 7).

Distribution of light reflectance on the diffuser plate 30 will be described in detail. Light reflectance on the diffuser plate 30 becomes continuously smaller along the shorter side (Y-axis direction) with increasing distance from the hot cathode tube 17, and becomes larger with increasing proximity to the hot cathode tube 17, and the distribution of the light reflectance is normal distribution (drawing a bell-shaped curve), as shown in FIGS. 7 to 9. Specifically, the light reflectance on the diffuser plate 30 becomes maximum at a central part thereof along the shorter side (aligned to the center of the hot cathode tube 17), and becomes minimum at both ends thereof along the shorter side. The maximum value of the light reflectance is about 65%, for example, and the minimum value of the same is about 30%, for example, which is equal to the light reflectance of the diffuser plate 30. Therefore, it can be said that the light reflecting portion 32 is less disposed or hardly disposed at the both ends of the diffuser plate 30 along the shorter side. In addition, a region of the diffuser plate 30 with light reflectance exceeding a value (about 47.5%, for example) obtained by subtracting the minimum value from the maximum value of the light reflectance and adding the minimum value to the half of the subtracted value, is set as half-value width region HW. Width of the half-value width region HW constitutes a half-value width. Specifically, assuming that the maximum value of the light reflectance is designated as Rmax and the minimum value of the same is designated as Rmin, a region of the diffuser plate 30 with light reflectance Rb satisfying Inequality (3) as shown below is defined as half-value width region HW.

[Inequality 3]

$$(Rmax - Rmin)/2 + Rmin < Rb \qquad ... (3)$$

Meanwhile, regions of the diffuser plate 30 with light reflectance not exceeding a value (about 47.5%, for example) obtained by subtracting the minimum value from the maximum value of the light reflectance and adding the minimum value to the half of the subtracted value, that is, regions other than the half-value width region HW, are defined as non-half-value width regions NHW. Specifically, assuming that the maximum value of the light reflectance is designated as Rmax and the minimum value of the same is designated as Rmin, regions of the diffuser plate 30 with light reflectance Ra satisfying Inequality (4) as shown below are defined as non-half-value width regions NHW. The non-half-value width region NHW is disposed in a pair sandwiching the half-value width region HW in the diffuser plate 30.

[Inequality 4]

$$(Rmax - Rmin)/2 + Rmin > Ra \qquad ... (4)$$

The ratio of the half-value width to the shorter side dimension of the diffuser plate 30 according to the embodiment is about 60%, for example. That is, a region of about 60% at the center of the diffuser plate 30 along the shorter side is the half-value width region HW, and regions of about 20% each at the both ends of the diffuser plate 30 along the shorter side are the non-half-value width regions NHW. The half-value width region HW includes the entire light source arranged region LA (light source overlapping area DA) and predetermined regions of the light source non-arranged regions LN (light source non-overlapping areas DN) adjacent to the light source arranged region LA. Specifically, the half-value width region HW includes more than the halves of the light source non-arranged regions LN, and the ratio of each of the regions to the shorter side dimension of the diffuser plate 30 is about 28%, for example. Meanwhile, the non-half-vale width regions NHW include predetermined regions of the light source non-arranged regions LN closer to the ends of the diffuser plate 30 (regions opposite to the light source arranged region LA). Specifically, the non-half-value width regions NHW include less than the halves of the light source non-arranged regions LN, and the ratio of each of the regions to the shorter side dimension of the diffuser plate 30 is about 20%, for example, as described above. In addition, the half-value width region HW can be said to be a high-reflectance region with relatively high light reflectance as compared to the non-half-value width regions NHW, and conversely, the non-half-value width regions NHW can be said to be low-reflectance regions with relatively low light reflectance.

Due to the foregoing distribution of the light reflectance, the light reflecting portion 32 is formed in a manner as described below. Specifically, the dots 32a constituting the light reflecting portion 32 have a maximum area at the central part of the diffuser plate 30 along the shorter side, that is, the central part of the hot cathode tube 17. The area of the dots 32a becomes gradually smaller with increasing distance from the central part, and becomes smallest at the endmost parts of the diffuser plate 30 along the shorter side. That is, the area of the dots 32a is set smaller with increasing distance from the center of the hot cathode tube 17. According to the thus configured diffuser plate 30, it is possible to obtain gentle brightness distribution of illumination light on the entire diffuser plate 30, and therefore realize gentle brightness distribution of illumination light on the entire backlight unit 12. In addition, as a means for adjusting the light reflectance, the dots 32a of the light reflecting portion 32 may be unified in area but changed in space therebetween.

The embodiment is characterized in that the rising portions 20b of the reflection sheet 20 are configured to rise in two steps from the bottom plate 14a toward the optical member 15, as shown in FIG. 3. Further, the rising portions 20b are disposed in correspondence with layout of the light source in the chassis 14 (the light source arranged region LA and the light source non-arranged regions LN) and optical design in the diffuser plate 30 (the half-value-width region HW and the non-half-value regions NHW), thereby to uniform the quantity of light supplied to the diffuser plate 30 in a plane thereof.

Specifically, as shown in Fig. 6, the rising portions 20b are formed by first rising sections 25 rising frontward at a predetermined angle from the bottom portion 20a and second rising sections 26 rising further frontward at a predetermined angle from distal ends of the first rising sections 25. The first rising sections 25 and the second rising sections 26 rise at different angles. Base ends of the first rising section 25 have a base point on the bottom plate 14a, and are connected directly to the ends of the bottom portion 20a along the Y-axis direction. The distal ends of the first rising sections 25 and base ends of the second rising sections 26 are directly connected to each other. Distal ends of the second rising sections 26 reach the diffuser plate 30 of the optical member 15, and are connected directly to extending base ends of the extending portions 20c. The rising portions 20b are entirely disposed in the light source non-arranged regions LN, as described above.

The first rising sections 25 are sloped with a certain gradient from the base ends (the bottom portion 20a side and the hot cathode tube 17 side) to the distal ends (the second rising section 26 side and opposite to the hot cathode tube 17 side). The first rising sections 25 are configured to have plate surfaces (front surfaces) sloped in both the Y-axis direction and the Z-axis direction, that is, with respect to the plate surface (front surface) of the bottom portion 20a (the diffuser plate 30). Therefore, space between the first rising sections 25 and the opposed diffuser plate 30 becomes smaller on the distal end sides, that is, with increasing distance from the hot cathode tube 17 along the Y-axis direction (with increasing proximity from the center to the ends of the screen). The angle θ1 formed by the first rising sections 25 with respect to the bottom portion 20a (diffuser plate 30) (the angle of rising from the bottom portion 20a, which is formed with respect to the Y-axis direction (from the bottom portion 20a toward the rising portions 20b)) is preferably an acute angle (not exceeding 90 degrees), more preferably, an angle not exceeding 45 degrees, and is specifically about 20 degrees, for example.

Base end positions BP1 of the first rising sections 25 are superimposed on the half-value width region HW of the diffuser plate 30 and are disposed in the light source non-arranged regions LN. In contrast, distal end positions EP1 of the first rising sections 25 are superimposed on the non-half-value width regions NHW of the diffuser plate 30 and are disposed in the light source non-arranged regions LN. Therefore, the first rising sections 25 cross the half-value width region HW and the non-half-value width regions NHW of the diffuser plate 30, and have base ends located in the half-value width region HW and distal ends located in the non-half-value width regions NHW, across boundaries between the half-value width region HW and the non-half-value width regions NHW.

The second rising sections 26 are sloped with a certain gradient from the based ends (the first rising section 25 side and the hot cathode tube 17 side) to the distal ends (the extending portion 20c side and opposite to the hot cathode tube 17 side). The second rising sections 26 have plate surfaces (front surfaces) sloped in both the Y-axis direction and the Z-axis direction, that is, with respect to the plate surface (front surface) of the diffuser plate 30 (the bottom portion 20a). Therefore, space between the second rising sections 26 and the opposed diffuser plate 30 becomes smaller with increasing distance from the hot cathode tube 17 on the distal end side, that is, along the Y-axis direction (with increasing proximity from the center to the ends of the screen). The angle θ2 formed by the second rising sections 26 with respect to the diffuser plate 30 (the bottom portion 20a) (along the Y-axis direction (the direction from the bottom portion 20a to the rising portions 20b)) is preferably an acute angle (not exceeding 90 degrees), more preferably an angle not exceeding 45 degrees. However, the angle θ2 is set larger than the foregoing angle θ1 formed by the first rising sections 25 with respect to the bottom portion 20a, and is specifically about 30 degree, for example. That is, the second rising sections 26 have the rising angle steeper than the first rising sections 25. Therefore, the ratio of change in the space between the second rising sections 26 and the diffuser plate 30 along the Y-axis direction is larger than the ratio of change in the space between the first rising sections 25 and the diffuser plate 30 along the Y-axis direction.

Base end positions BP2 of the second rising sections 26 are located in the same position as the foregoing distal end positions EP1 of the first rising sections 25, and are superimposed on the non-half-value width regions NHW of the diffuser plate 30 and are disposed in the light source non-arranged regions LN. In contrast, distal end positions EP2 of the second rising sections 26 are superimposed on the non-half-value width regions NHW of the diffuser plate 30 and are disposed in the light source non-arranged regions LN. Therefore, the second rising sections 26 are entirely disposed in the non-half-value width regions NHW.

Next, detailed descriptions will be provided as to relationships between shorter side dimensions (the dimension along the Y-axis direction) of the bottom portion 20a and the rising portions 20b (the first rising sections 25 and the second rising sections 26) and the dimension of the half-value width region HW or the non-half-value width regions NHW along the Y-axis direction. Shorter side dimension W1 of the bottom portion 20a is about 40% of the shorter side dimension of the chassis 14, and is about 60% of the dimension of the half-value width region HW along the Y-axis direction, as shown in FIG. 3. Meanwhile, the shorter side dimension of the rising portions 20b (W2 + W3) is about 30% of the shorter side dimension of the chassis 14, and is about 50% of the dimension of the half-value width region HW along the Y-axis direction. In addition, the shorter side dimension of the rising portions 20b is about 1.6 times the dimension of the non-half-value width regions NHW along the Y-axis direction. Therefore, the bottom portion 20a is superimposed on a region of about 60% at the center of the half-value width region HW, whereas the rising portions 20b are superimposed on regions of about 20% each at the both ends of the half-value width region HW and are superimposed on the entire non-half-value width regions NHW. Boundaries between the bottom portion 20a and the rising portions 20b (the base end positions BP1 of the first rising sections 25) is located closer to the ends of the half-value width region HW (eccentric positions on the opposite side of the hot cathode tube 17), and are not superimposed on the hot cathode tube 17, that is, are located in the light source non-arranged regions LN. Therefore, the bottom portion 20a crosses the entire light source arranged region LA and the partial light source non-arranged regions LN (end portions closer to the light source arranged region LA), and the rising portions 20b are disposed in correspondence with the remaining portions of the light source non-arranged regions LN. Accordingly, the bottom portion 20a is opposed along the Z-axis direction to the light emitting plane ES of the hot cathode tube 17 in the light source arranged region LA. In addition, the bottom portion 20a is in parallel to the bottom plate 14a, whereby the sockets 18 needed for attachment of the hot cathode tube 17 to the chassis 14, can be easily fixed to the bottom plate 14a.

Of the rising portions 20b, the shorter side dimension W2 of the first rising sections 25 is about 25% of the shorter side dimension of the chassis 14 and is about 40% of the dimension of the half-value width region HW along the Y-axis direction, as shown in FIGS. 3 and 6. In addition, the shorter side dimension W2 of the first rising sections 25 is about 3.6 times the dimension of the non-half-value width regions NHW along the Y-axis direction. In contrast, of the rising portions 20b, the shorter side dimension W3 of the second rising sections 26 is about 6% of the shorter side dimension of the chassis 14 and is about 35% of the dimension of the non-half-value width regions NHW along the Y-axis direction. Therefore, the first rising sections 25 are superimposed on regions of about 20% each at the both ends of the half-value width region HW and are superimposed on regions of about 65% each at the center of the non-half-value width regions NHW. Boundaries between the first rising sections 25 and the second rising sections 26 (the leading end positions EP1 of the first rising sections 25 and the base end positions BP2 of the second rising sections 26) are located closer to the end portions of the non-half-value width regions NHW (eccentric positions on the opposite side of the hot cathode tube 17).

The embodiment is structured as described above, and subsequently an operation of the embodiment will be described. When the hot cathode tube 17 is turned on for use of the liquid crystal display device 10, light emitted from the hot cathode tube 17 enters the first plane 30a of the diffuser plate 30 directly or indirectly after being reflected by the components (the holders 19, the reflection sheet 20, and the like) disposed within the chassis 14. The light is transmitted through the diffuser plate 30, and then is output toward the liquid crystal panel 11 via the optical sheet 31.

Here, the indirect light traveling toward the diffuser plate 30 is basically reflected by the reflection sheet 20 laid in the almost entire chassis 14 (refer to FIGS. 2 and 5). The rising portions 20b (the first rising sections 25 and the second rising sections 26) disposed in the light source non-arranged regions LN of the reflection sheet 20 are configured to rise frontward from the bottom portion 20a partially disposed in the light source arranged region LA as shown in FIGS. 3 and 6. Therefore, the space between the rising portions 20b and the diffuser plate 30 ranging from the base ends to the distal ends (in the direction of moving away from the hot cathode tube 17), that is, the space in which the light is exchanged in the chassis 14 is made narrow, and the length of a light path from the rising portions 20b to the diffuser plate 30 is made short. Here, the quantity of light in the chassis 14 tends to be substantially inversely proportional to the distance from the hot cathode tube 17, and tends to be smaller in the light source non-arranged regions LN than the light source arranged region LA, and therefore, the light source non-arranged regions LN are prone to generate dark sections. In this regard, in the embodiment, in the light source non-arranged regions LN where the quantity of light tends to be smaller, the rising portions 20b narrow the space in which light is exchanged and shorten the length of a light path toward the diffuser plate 30, thereby achieving efficient guide of light toward the diffuser plate 30. This makes it possible to supply sufficient quantity of light to the diffuser plate 30 in the light source non-arranged regions LN, whereby the light source non-arranged regions LN are unlikely to be visually recognized as dark sections.

In the embodiment, particularly, the rising portions 20b are configured to rise in two steps and the angle θ2 formed by the second rising sections 26 with respect to the diffuser plate 30 is set larger than the angle θ1 formed by the first rising sections 25 with respect to the bottom plate 14a, thereby bringing about the following operations and advantageous effects. Specifically, according to the angles as described above, it is possible to shorten the depth of space between the second rising sections 26 and the diffuser plate 30 (a distance along the Y-axis direction ranging from the base end to the distal end) and provide wide space between the distal ends of the second rising sections 26 and the diffuser plate 30, as compared to the case where the angle between the second rising sections and the diffuser plate 30 is equal to or smaller than the angle θ1 between the first rising sections 25 and the bottom plate 14a and the distal end of the second rising portion reaches the diffuser plate 30. Therefore, light is likely to enter into the space between the distal ends of the second rising sections 26 and the diffuser plate 30, thereby providing sufficient supply quantity of light to the space. Accordingly, local dark sections are less prone to occur at the parts of the diffuser plate 30 corresponding to the distal ends and their proximities of the second rising sections 26.

Meanwhile, in the embodiment, the angle θ1 formed by the first rising sections 25 with respect to the bottom plate 14a is smaller than the angle θ2 formed by the second rising sections 26 with respect to the diffuser plate 30, and therefore it is possible to provide a wider formation range of the first rising sections 25 in a planar view and provide a narrower formation range of the bottom portion 20a in a planar view, as compared to the case where the angle between the first rising sections and the bottom plate 14a is equal to or larger than the angle θ2 formed by the second rising sections 26 with respect to the diffuser plate 30. At the first rising sections 25, the length of a light path in which reflected light reaches the diffuser plate 30 is shorter than that in the bottom portion 20a, which achieves relatively high efficiency of supplying light to the diffuser plate 30. Therefore, reducing the formation range of the bottom portion 20a and extending the formation range of the first rising sections 25 allow more efficient supply of light to the diffuser plate 30, thereby making it less prone to generate uneven supply of light to the diffuser plate 30. Accordingly, local dark sections are unlikely to occur at the parts of the diffuser plate 30 corresponding to the base ends and their proximities of the first rising sections 25.

Next, the light reflecting feature of the diffuser plate 30 will be described in detail. The first plane 30a of the diffuser plate 30 into which light emitted from the hot cathode tube 17 enters, has the light reflecting portion 32 with in-plane light reflectance varying by region as shown in FIG. 7, which makes it possible to control appropriately the light incident efficiency for each region. Specifically, the light source overlapping area DA of the first plane 30a superimposed on the hot cathode tube 17 receives much direct light from the hot cathode tube 17 and thus has relatively larger quantity of light than that in the light source not-overlapping areas DN. Accordingly, by making the light reflectance of the light reflecting portion 32 relatively large at the light source overlapping area DA (refer to FIGS. 7 and 9), it is possible to suppress (regulate) the incidence of light on the first plane 30a and reflect and return more light to the chassis 14. Meanwhile, the light source non-overlapping areas DN of the first plane 30a not superimposed on the hot cathode tube 17 receive less direct light from the hot cathode tube 17, and thus have relatively smaller quantity of light than that in the light source overlapping area DA. Accordingly, by making the light reflectance of the light reflecting portion 32 relatively small at the light source non-overlapping areas DN (refer to FIGS. 7 and 9), it is possible to facilitate incidence of light on the first plane 30a. At that time, light reflected toward the chassis 14 by the light reflecting portion 32 of the light source overlapping area DA is guided by the reflection sheet 20 or the like to the light source non-overlapping areas DN for compensating the quantity of light, which makes it possible to provide sufficient quantity of light incident on the light source non-overlapping areas DN.

Although the quantity of light in the chassis 14 can be unified to some extent by devising the optical design of the diffuser plate 30 as described above, it is still difficult to completely unify the light quantity and therefore the light quantity in the chassis 14 is likely to be smaller in the light source arranged region LA than the light source non-arranged regions LN. As a result, the quantity of light to be supplied to the diffuser plate 30 tends to be relatively smaller in the non-half-value width regions NHW than the half-value width region HW of the diffuser plate 30. Accordingly, in the embodiment, the quantity of light to be supplied to the diffuser plate 30 is further unified by devising the layout of the rising portions 20b in the half-value width region HW and the non-half-value width regions NHW.

Specifically, in the embodiment, of the rising portions 20b, the base end position EP2 of the second rising sections 26 are located at positions superimposed on the non-half-value width regions NHW of the diffuser plate 30, and thus the second rising sections 26 are entirely superimposed on the non-half-value width regions NHW. Accordingly, it is possible to shorten the depth of space between the second rising sections 26 and the non-half-value width regions NHW of the diffuser plate 30 (a distance along the Y-axis direction ranging from the base end to the distal end) and provide wide space between the distal ends of the second rising sections 26 and the non-half-value width regions NHW of the diffuser plate 30. Therefore, light is likely to enter between the distal ends of the second rising sections 26 and the non-half-value width regions NHW of the diffuser plate 30, which provides sufficient quantity of light for the space. Accordingly, it is possible to provide sufficient supply quantity of light to the non-half-value width regions NHW of the diffuser plate 30 that are likely to lack in light quantity.

Further, in the embodiment, of the rising portions 20b, the base end positions BP1 of the first rising sections 25 are superimposed on the half-value width region HW of the diffuser plate 30 and the distal end positions EP1 of the first rising sections 25 are superimposed on the non-half-value width regions NHW in the diffuser plate 30. Accordingly, the first rising sections 25 cross boundaries between the half-value width region HW and the non-half-value width regions NHW. Therefore, light can be efficiently guided by the first rising sections 25 to the diffuser plate 30 also at the boundary positions between the half-value width region HW and the non-half-value width regions NHW.

If the base end position and the distal end position of each of the first rising positions are both superimposed on the non-half-value width regions NHW, the first rising section is not located at the boundaries between the half-value width region HW and the non-half-value width regions NHW, and the bottom portion exists there. Accordingly, at the boundaries, the length of a light path from the bottom portion to the diffuser plate 30 becomes longer than the length of a light path from the first rising section to the diffuser plate 30, thereby resulting in locally lowered quantity of light supplied to the diffuser plate 30. In this case, parts of the non-half-value width regions NHW with a locally lowered light quantity due to the presence of the bottom portion (dark sections) intervene between the half-value width region HW originally having much light quantity (bright section) and the parts of the non-half-value width regions NHW supplied with additional light quantity by the rising portions (bright sections). Accordingly, the local dark sections are prone to be visually recognized.

In this regard, in the embodiment, the bottom portion 20a is not located at the boundaries between the half-value width region HW and the non-half-value width regions NHW, and thus the first rising sections 25 guide light efficiently toward the diffuser plate 30, whereby it is possible to avoid that locally lowered quantity of light is supplied to the diffuser plate 30. This makes it less prone to generate a difference in quantity of light supplied to the half-value width region HW and the non-half-value width regions NHW of the diffuser plate 30 and in quantity of light output from the same, thereby making it less prone to generate uneven brightness of illumination light.

In contrast to the foregoing, if the base end positions and the distal end positions of the first rising positions (the base end positions of the second rising sections) are both superimposed on the half-value width region HW, the entire first rising sections and the partial second rising sections , that is, the most part of the rising portions is superimposed on the half-value width region HW. In the half-value width region HW, light reflectance is high and light output is suppressed as compared to the non-half-value width regions NHW. Accordingly, if the most part of the rising portions is superimposed on the half-value width region HW, light output may be excessively suppressed to bring about lower brightness. In this regard, in the embodiment, the first rising sections 25 are partially superimposed on the half -value width region HW, which avoids that emission of light reflected by the rising portions 20b and reaching the diffuser plate 30 is excessively suppressed. This makes it possible to suppress decrease in brightness at the parts of the diffuser plate 30 superimposed on the rising portions 20b.

<Example>

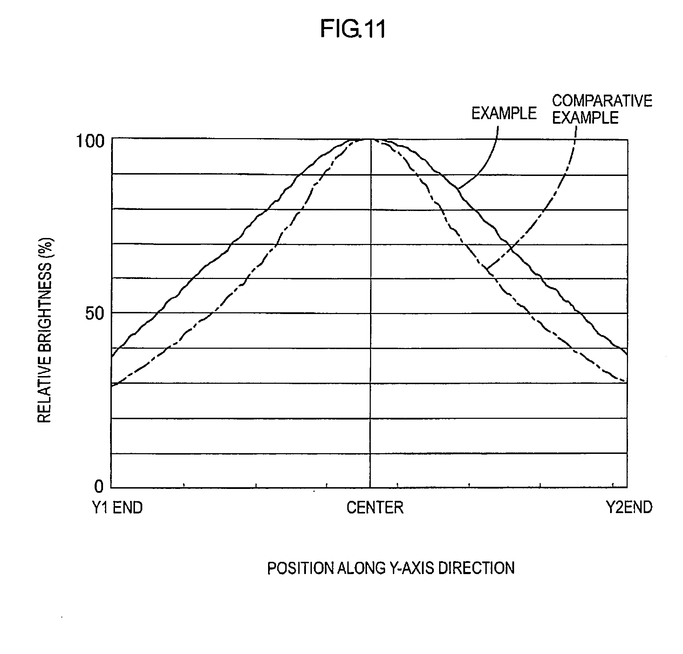

Experiments were conducted on an example using the layout of the diffuser plate 30 and the reflection sheet 20 according to the foregoing embodiment and a comparative example using a layout of the diffuser plate and the reflection sheet different from that of the foregoing embodiment, thereby to determine to what degrees uneven brightness is visually recognized in the example and the comparative example. Table 1 and FIG. 11 show results of the experiments. At the comparative experiments, two kinds of diffuser plates with different ratios of a half-value width region and non-half-value width regions were prepared. Each of the reflection sheets was stored in a chassis, and each of the diffuser plates was disposed at the opening of the chassis. Then, a hot cathode tube is turned on, and the example or the comparative example was visually inspected from the almost front side. In "Evaluation" column of Table 1, "Excellent" means that no uneven brightness is recognized; "Good" means that uneven brightness is hardly recognized; "Acceptable" means that uneven brightness is slightly recognized; and "Not good" means that uneven brightness is recognized. In addition, all of "Base end positions of first rising sections, "base end positions of second rising sections, " and "boundaries between half-value width regions and non-half-value width regions" shown in Table 1 are defined by distances from the central position of the chassis along the Y-axis direction (the central position of the hot cathode tube). FIG. 11 is a graph indicating brightness distribution of light emitted from the diffuser plate along the Y-axis direction with the layouts of the diffuser plates and the reflection sheets according to the example and the comparative example. In the graph, the vertical axis denotes relative brightness with respect to the maximum brightness of 100%, and the lateral axis denotes the position of the diffuser plate along the Y-axis direction (refer to FIG. 3).

In the example, the base end positions BP1 of the first rising sections 25 are superimposed on the half-value width region HW and the base end positions BP2 of the second rising sections 26 are superimposed on the non-half-value width regions NHW, and the first rising sections 25 cross the boundaries across the half-value width region HW and the non-half-value width regions NHW, and the second rising sections 26 are entirely superimposed on the non-half-value width regions NHW. In the comparative example, the base end positions of both the first rising sections and the second rising sections are superimposed on the half-value width region, the first rising sections are entirely superimposed on the half-value width region and the second rising sections cross the boundaries between the half-value width region and the non-half-value width regions.

Table 1

|  | Base end position of first rising section (mm) | Base end position of second rising section (mm) | Boundaries between half-value width region and non-half-value width region (mm) | Evaluation |
|---|---|---|---|---|
| Example | 76 | 170.2 | 122 | Good |
| Comparative example | 76 | 170.2 | 174 | Acceptable |

As is apparent from Table 1 and FIG. 11, employing the layout of the diffuser plate 30 and the reflection sheet 20 in the example makes it possible to efficiently prevent uneven brightness while maintaining high brightness as a whole. In contrast, in the comparative example, sufficiently high brightness is maintained at the center of the screen, but there is a relatively large difference in brightness between the center and the ends of the screen as compared to the example, and the difference can be likely to be recognized as uneven brightness. This is possibly because, in the comparative example, the entire first rising sections and the partial second rising sections, that is, the most part of the rising portions are superimposed on the half-value-width region with high light reflectance, and therefore emission of light reflecting on the rising portions and reaching the diffuser plate is excessively suppressed to reduce brightness at the parts of the diffuser plate superimposed on the rising portions. As compared to this, in the example, the first rising sections 25 are partially superimposed on the half-value width region HW, which avoids that emission of light reflecting on the rising portions 20b and reaching the diffuser plate 30 is excessively suppressed. Therefore, it is possible to maintain high brightness at the parts of the diffuser plate 30 superimposed on the rising portions 20b, that is, at the ends of the screen, and suppress a difference in brightness between the center and the ends of the screen. Accordingly, uneven brightness is less prone to be visually recognized in the example.

As described above, the backlight unit 12 of the embodiment has the hot cathode tube 17 as a light source; the chassis 14 having the bottom plate 14a on a side of the hot cathode tube 17 opposite to a light output side and containing the hot cathode tube 17; the diffuser plate 30 as the optical member 15 disposed on the light output side of the hot cathode tube 17; and the reflection sheet 20 as a light reflection member disposed in the chassis 14 and having the rising portions 20b rising from the bottom plate 14a toward the diffuser plate 30 for reflection of light. The rising portions 20b are configured to rise stepwise and have at least the first rising sections 25 with base ends on the bottom plate 14a as a base point and the second rising sections 26 with distal ends reaching the diffuser plate 30. The angle θ2 formed by the second rising sections 26 with respect to the diffuser plate 30 is larger than the angle θ1 formed by the first rising sections 25 with respect to the bottom plate 14a.

Accordingly, at the rising portions 20b in the reflection sheet 20, the length of a light path in which light reflected there reaches the diffuser plate 30 becomes shorter, which makes it possible to efficiently supply light to the diffuser plate 30. In the embodiment, the rising portions 20b are configured to rise stepwise, and when the first rising sections 25 with base ends on the bottom plate 14a as a base point and the second rising sections 26 with distal ends reaching the diffuser plate 30 are set in a manner described below, it is possible to unify the quantity of light to be supplied to the diffuser plate 30 in a plane thereof.

Specifically, since the angle θ2 formed by the second rising sections 26 with respect to the diffuser plate 30 is larger than the angle θ1 formed by the first rising sections 25 with respect to the bottom plate 14a, it is possible to provide wider space between the distal ends of the second rising sections 26 and the diffuser plate 30, as compared to the case where the angle θ2 formed by the second rising sections 26 with respect to the diffuser plate 30 is equal to or smaller than the angle θ1 formed by the first rising sections 25 with respect to the bottom plate 14a. Therefore, light is likely to enter between the distal ends of the second rising sections 26 and the diffuser plate 30 to allow sufficient supply quantity of light, whereby it is unlikely to generate local dark sections at parts of the diffuser plate 30 corresponding to the distal ends and their proximities of the second rising sections 26.

Meanwhile, the angle θ1 formed by the first rising sections 25 with respect to the bottom plate 14a is smaller than the angle θ2 formed by the second rising sections 26 with respect to the diffuser plate 30, it is possible to provide a wide formation range of the first rising sections 25, as compared to the case where the angle θ1 formed by the first rising sections 25 with respect to the bottom plate 14a is equal to or larger than the angle θ2 formed by the second rising sections 26 with respect to the diffuser plate 30. Therefore, it is possible to efficiently supply light to the diffuser plate 30 by the first rising sections 25 in the sufficient formation range, whereby it is unlikely to cause uneven supply quantity of light to the diffuser plate 30 and generate local dark sections at parts of the diffuser plate 30 corresponding to the leading base ends and their proximities of the first rising sections 25. Accordingly, it is possible to unify the quantity of light to be supplied to the diffuser plate 30 in a plane thereof.

In addition, the rising portions 20b are configured in a manner that the distal ends of the first rising sections 25 and the base ends of the second rising sections 26 are connected to each other. Accordingly, since the rising portions 20b are configured to rise in two steps, it is possible to prevent the reflection sheet 20 from being complicated in shape as compared to the case where the rising portions are configured to rise in three or more steps. Therefore, the embodiment achieves reduction in manufacturing cost of the reflection sheet 20, and is also preferably suited for keeping uniform shape of the rising portions 20b.

In addition, the chassis 14 has a part opposed to the diffuser plate 30 which is divided into the light source arranged region LA where the hot cathode tube 17 is disposed and the light source non-arranged regions LN where the hot cathode tube 17 is not disposed. Of the rising portions 20b, at least the second rising sections 26 are located in the light source non-arranged regions LN. Accordingly, even though light quantity in the chassis 14 tends to be relatively smaller in the light source non-arranged regions LN than the light source arranged region LA, disposing the second rising sections 26 in the light source non-arranged regions LN makes it possible to provide sufficiently wide space between the second rising sections 26 and the diffuser plate 30 and facilitate entry of light between the same. This allows sufficient amount of light to be supplied to the diffuser plate 30, even in the light source non-arranged regions LN where light quantity tends to be small.

In addition, the reflection sheet 20 is disposed along the bottom plate 14a and has the bottom portion 20a at least partially disposed on the light source arranged region LA, and the first rising sections 25 are configured to rise from the bottom portion 20a toward the diffuser plate 30. Since the part of the reflection sheet 20 corresponding to the light source arranged region LA intervenes between the hot cathode tube 17 and the bottom plate 14a of the chassis 14, and if the part is complicated in shape, the part may interfere with installation of the hot cathode tube 17, for example. In this regard, according to the embodiment, only part of the reflection sheet 20 in the bottom portion 20a along the bottom plate 14a is located in the light source arranged region LA, and therefore the reflection sheet 20 is unlikely to interfere with installation of the hot cathode tube 17, for example.

In addition, the base end positions BP1 of the first rising sections 25 at the bottom portion 20a are located in the light source non-arranged regions LN. Accordingly, the bottom portion 20a is disposed over the entire light source arranged region LA, which makes it possible to reliably prevent the reflection sheet 20 from interfering with installation of the hot cathode tube 17, for example. In addition, the entire rising portions 20b including the first rising sections 25 are disposed in the light source non-arranged regions LN, it is possible to supply sufficient quantity of light to the parts of the diffuser plate 30 superimposed on the light source non-arranged regions LN by reflecting light on the rising portions 20b in the light source non-arranged regions LN where light quantity tends to be smaller in the chassis 14 as compared to the light source arranged region LA.

In addition, the hot cathode tube 17 has the light-emitting surface ES emitting light, and the bottom portion 20a is configured to be opposed to the light-emitting surface ES. This makes it possible to reflect light from the light-emitting surface ES of the hot cathode tube 17 toward the diffuser plate 30 by the bottom portion 20a disposed in the entire light source arranged region LA. If the base end positions of the first rising sections are located in the light source arranged region LA, the space between the first rising sections and the hot cathode tube 17 becomes narrow, and reflection light in the light source arranged region LA is likely to be returned directly to the hot cathode tube 17. As compared to this, in the embodiment, the bottom portion 20a is disposed over the entire light source arranged region LA, it is possible to provide sufficiently wide space between the bottom portion 20a and the hot cathode tube 17. Accordingly, light reflected by the bottom portion 20a in the light source arranged region LA is less prone to be returned directly to the hot cathode tube 17, thereby maintaining light use efficiency at a high level.

In addition, the first rising sections 25 and the second rising sections 26 are formed such that the space between these sections and the diffuser plate 30 becomes smaller with increasing distance from the hot cathode tube 17. The quantity of light in the chassis 14 tends to be smaller with increasing distance from the hot cathode tube 17. In contrast to this, when the space between the first rising sections 25 and the second rising sections 26 and the diffuser plate 30 is set so as to be smaller with increasing distance from the hot cathode tube 17, the length of a light path ranging from the rising sections 25 and 26 to the diffuser plate 30 tends to be proportional to the quantity of light in the chassis 14. With the shorter light path, light can be guided more efficiently to the diffuser plate 30, and therefore the rising sections 25 and 26 allows light to be evenly guided to the diffuser plate 30.

In addition, the first rising sections 25 and the second rising sections 26 are sloped. Accordingly, the sloped first rising sections 25 and second rising sections 26 make it possible to reflect light to the diffuser plate 30 efficiently and evenly.

The angle θ1 formed by the first rising sections 25 with respect to the bottom plate 14a and the angle θ2 formed by the second rising sections 26 with respect to the diffuser plate 30 are both acute angles. Light reflected by the first rising sections 25 is angled in accordance with the angle θ1 to the bottom plate 14a, and light reflected by the second rising sections 26 is angled in accordance with the angle θ2 to the diffuser plate 30. Accordingly, these acute angles allow efficient guidance of light to the diffuser plate 30.

The chassis 14 has a rectangular shape in a planar view, and the hot cathode tube 17 is configured to extend along the longer side of the chassis 14, and the light source arranged region LA and the light source non-arranged regions LN are aligned along the shorter side of the chassis 14. This arrangement is preferably suited for using the linear hot cathode tube 17 as a light source, for example.

The reflection sheet 20 has a surface of a white-based color. This makes it possible to reflect light efficiently on the surface of the reflection sheet 20.

The reflection member is a separate component from the chassis 14, and is formed by the reflection sheet 20 laid in the chassis 14. This increases the degree of freedom in selecting a material for the reflection sheet 20.

The reflection sheet 20 is made of foamed PET. This makes the reflection sheet 20 lightweight and excellent in formability.

The reflection sheet 20 has the bottom portion 20a disposed along the bottom plate 14a, and the bottom plate 14a has at end portions thereof the side plates 14b rising toward the diffuser plate 30, and the side plates 14b have at distal ends thereof the receiving plates 14c jutting outward. Meanwhile, the second rising sections 26 have at distal ends thereof the extending portions 20c extending along the receiving plates 14c. Accordingly, in the reflection sheet 20, the bottom portion 20a is disposed along the bottom plate 14a, and the extending portions 20c are disposed along the receiving plates 14c. This makes it possible to stabilize the shape of the rising portions 20b positioned between the bottom portion 20a and the extending portions 20c.

The chassis 14 has a part opposed to the diffuser plate 30 which is divided into the light source arranged region LA where the hot cathode tube 17 is disposed and the light source non-arranged regions LN where the hot cathode tube 17 is not disposed. Meanwhile, out of the part of the diffuser plate 30 superimposed on the light source arranged region LA (light source overlapping area DA), at least a plane of the diffuser plate 30 opposed to the hot cathode tube 17 (first plane 30a) has larger light reflectance than, out of the part of the diffuser plate 30 superimposed on the light source non-arranged regions LN (light source overlapping area DA), at least a plane of the diffuser plate 30 opposed to the hot cathode tube 17 (first plane 30a). Assuming that the maximum value of the light reflectance in the plane of the diffuser plate 30 opposed to the hot cathode tube 17 (first plane 30a) is designated as Rmax and the minimum value of the same is designated as Rmin, the base end positions BP2 of the second rising sections 26 are superimposed on regions of the diffuser plate 30 (non-half-value width regions NHW) having light reflectance Ra in a range expressed by Inequality (5) shown below.

[Inequality 5]

$$(Rmax - Rmin)/2 + Rmin > Ra \qquad ... (5)$$

Light emitted from the hot cathode tube 17 first reaches a part of the diffuser plate 30 with a relatively high light reflectance, and therefore most of the light is reflected (that is, not transmitted), whereby brightness of illumination light is suppressed with respect to quantity of light emitted from the hot cathode tube 17. Meanwhile, the light reflected here can be reflected by the reflection sheet 20 in the chassis 14 so as to reach the light source non-arranged regions LN. The part of the diffuser plate 30 superimposed on the light source non-arranged regions LN has relatively small light reflectance, and therefore more light can be transmitted to thereby obtain predetermined brightness of illumination light.

Incidentally, the quantity of light in the chassis 14 is unified to some extent by setting the light reflectance of the diffuser plate 30 as described above. Nevertheless, it is still difficult to completely uniform the light reflectance, and the quantity of light is prone to be smaller in the light source non-arranged regions LN than the light source arranged region LA. Therefore, the quantity of light supplied to the diffuser plate 30 tends to be relatively smaller in the region of the diffuser plate 30 having light reflectance Ra in a range expressed by Inequality (5) (the non-half-value width regions NHW) than the region of the diffuser plate 30 having light reflectance in a range out of the range expressed by Inequality (5) (the half-value width region HW).

In the embodiment, the entire second rising sections 26 are superimposed on the regions of the diffuser plate 30 having light reflectance Ra in the range expressed by Inequality (5) (the non-half-value width regions NHW). Therefore, it is possible to provide sufficiently wide space between the distal ends of the second rising sections 26 and the regions of the diffuser plate 30 having light reflectance Ra in the range expressed by Inequality (5) (the non-half-value width regions NHW), and facilitate entry of light into the space. This moderates a difference in supply quantity of light that may be generated between the regions of the diffuser plate 30 having light reflectance Ra in the range expressed by Inequality (5) (the non-half-value width regions NHW) and the region of the diffuser plate 30 having light reflectance in the range out of the range expressed by Inequality (5) (the half-value width region HW).

The distal end positions EP1 of the first rising sections 25 are superimposed on the regions of the diffuser plate 30 having light reflectance Ra in the range expressed by Inequality (5) (the non-half-value width regions NHW), and the base end positions BP1 of the first rising sections 25 are superimposed on the region of the diffuser plate 30 having light reflectance Rb in a range expressed by Inequality (6) (the half-value width region HW) as follows:

[Inequality 6]

$$(Rmax - Rmin)/2 + Rmin < Rb \qquad ... \text{Inequality (6)}$$

Accordingly, the first rising sections 25 cross boundaries between the regions having light reflectance Ra in the range expressed by Inequality (5) (the non-half-value width regions NHW) and the region having light reflectance Rb in the range expressed by Inequality (6) (the half-value width region HW). If the base end positions of the first rising sections 25 are superimposed on the regions having light reflectance Ra in the range expressed by Inequality (5), the first rising sections 25 are not located at the boundaries between the regions having light reflectance Ra in the range expressed by Inequality (5) (the non-half-value width regions NHW) and the region having light reflectance Rb in the range expressed by Inequality (6) (the half-value width region HW). Therefore, there is a possibility that the quantity of light supplied to the diffuser plate 30 is locally decreased at the boundaries and proximities thereof where local dark sections may be generated. In this regard, according to the embodiment, the first rising sections 25 makes it possible to efficiently guide light to the diffuser plate 30 even at the boundaries and proximities thereof, thereby to avoid local decrease in the quantity of light supplied to the diffuser plate 30. Accordingly, it is possible to moderate a difference in supply quantity of light that may be generated between the regions of the diffuser plate 30 having light reflectance Ra in the range expressed by Inequality (5) (the non-half-value width regions NHW) and the region of the diffuser plate 30 having light reflectance Rb in the range expressed by Inequality (6) (the half-value width region HW).

The chassis 14 has a part opposed to the diffuser plate 30 which is divided into at least the first end portion 14A, the second end portion 14B positioned opposite to the first end portion 14A, and the central portion 14C sandwiched between the first end portion 14A and the second end portion 14B. Of the foregoing portions, the central portion 14C is the light source arranged region LA where the hot cathode tube 17 is disposed, and the first end portion 14A and the second end portion 14B are light source non-arranged regions LN where the hot cathode tube 17 is not disposed. Meanwhile, out of the part of the diffuser plate 30 superimposed on the light source arranged region LA (light source overlapping area DA), at least a plane of the diffuser plate 30 opposed to the hot cathode tube 17 (first plane 30a) has larger light reflectance than, out of the part of the diffuser plate 30 superimposed on the light source non-arranged regions LN (light source overlapping area DA), at least a plane of the diffuser plate 30 opposed to the hot cathode tube 17 (first plane 30a). Accordingly, light emitted from the hot cathode tube 17 first reaches a part of the diffuser plate 30 with relatively larger light reflectance, and therefore most of the light is reflected (that is, not transmitted), whereby brightness of illumination light is suppressed with respect to the quantity of light emitted from the hot cathode tube 17. Meanwhile, the light reflected here can be reflected by the reflection sheet 20 in the chassis 14 so as to reach the light source non-arranged regions LN. Since the parts of the diffuser plate 30 superimposed on the light source non-arranged regions LN are relatively smaller in light reflectance, more light can be transmitted to obtain predetermined brightness of illumination light. According to the embodiment, the central portion 14C is the light source arranged region LA and the first end portion 14A and the second end portion 14B are the light source non-arranged regions LN, which makes it possible to provide sufficient brightness at the central portion of the backlight unit 12. This also leads to provision of adequate brightness at a display central portion of the liquid crystal display device 10 equipped with the backlight unit 12, thereby resulting in favorable viewability.

The rising portions 20b are provided in a pair corresponding to the first end portion 14A and the second end portion 14B. This makes it possible to guide light more efficiently to the diffuser plate 30 by disposing the rising portions 20b in correspondence with the first end portion 14A and the second end portion 14B as light source non-arranged regions LN which are prone to have smaller quantity of light.

The diffuser plate 30 has at least a plane opposed to the hot cathode tube 17 (first plane 30a) where light reflectance becomes smaller with increasing distance from the hot cathode tube 17. This makes it possible to provide gentle brightness distribution of illumination light emitted from the diffuser plate 30, ranging from the part of the diffuser plate 30 superimposed on the light source arranged region LA to the part of the diffuser plate 30 superimposed on the light source non-arranged regions LN.

The plane of the diffuser plate 30 opposed to the hot cathode tube 17 (first plane 30a) has the light reflecting portion 32 reflecting light. This makes it possible to allow appropriate control of light reflectance in the plane of the diffuser plate 30 on the hot cathode tube 17 side, in accordance with the mode of the light reflecting portion 32.

The light reflecting portion 32 has an approximately point-like form in the plane of the diffuser plate 30 on the hot cathode tube 17 side, and is formed by a large number of light reflective dots 32a. This makes it possible to control light reflectance in an easy manner depending on the mode of the dots 32a (area, distribution density, and the like).

The light source is formed by the hot cathode tube 17. This achieves high brightness and the like.

The first embodiment of the invention is as described above, but the invention is not limited to the foregoing embodiment, and may include modification examples as shown below. In the following descriptions of the modification examples, the same components as those in the foregoing embodiment are given the same reference numerals and are not described or illustrated here.

<Modification example 1 of the first embodiment>

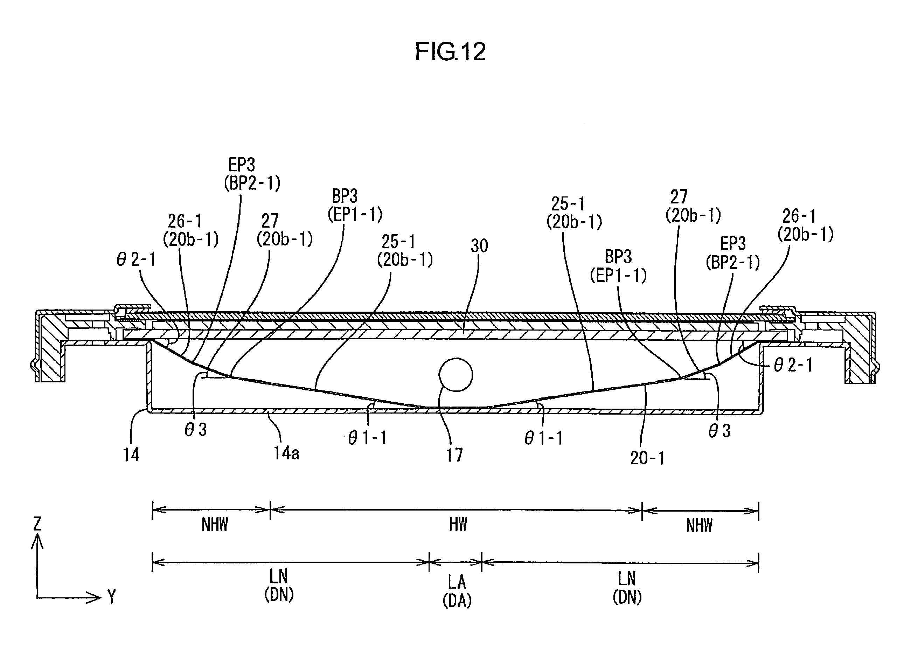

Modification example 1 of the first embodiment will be described with reference to FIG. 12. In the modification example, rising portions 20b-1 are modified in shape. FIG. 12 is a cross section view of the liquid crystal display device using the reflection sheet along the shorter side according to the modification example 1 of the first embodiment.

The rising portions 20b-1 are configured to rise in three steps as shown in FIG. 12. Specifically, the rising portions 20b-1 have first rising sections 25-1 with base ends on the bottom plate 14a of the chassis 14 as a base point, second rising sections 26-1 with distal ends reaching the diffuser plate 30, and third rising sections 27 intervening between the first rising sections 25-1 and the second rising sections 26-1. Angle θ3 formed by the third rising sections 27 with respect to the bottom plate 14a or the diffuser plate 30 is larger than an angle θ1-1 formed by the first rising sections 25-1 with respect to the bottom plate 14a, but is smaller than an angle θ2-1 formed by the second rising sections 26-1 with respect to the diffuser plate 30. In the third rising sections 27, base end positions BP3 (distal end positions BP1-1 of the first rising sections 25-1) and distal end positions EP3 (base end positions EP2-1 of the second rising sections 26-1) are located in the light source non-arranged regions LN and are superimposed on the non-half-value width regions NHW of the diffuser plate 30. Therefore, the third rising sections 27 are entirely superimposed on the non-half-value width regions NHW of the diffuser plate 30 together with the second rising sections 26.

In the modification example as described above, the rising portions 20b are increased in number of rising steps, and the angle θ3 formed by the additional third rising sections 27 with respect to the bottom plate 14a or the diffuser plate 30 are set between the angle θ1 formed by the first rising sections 25 and the angle θ2 formed by the second rising sections 26, and these angles formed by the rising sections 25-1, 26-1, and 27 become larger in proportion to respective distances from the hot cathode tube 17. Therefore, the space between the diffuser plate 30 and the rising portions 20b-1 can be more gently changed in the Y-axis direction, which makes it possible to guide light reflected on the rising portions 20b-1 toward the diffuser plate 30 in a more even manner, resulting in further preferred suppression of uneven brightness.

<Modification example 2 of the first embodiment>

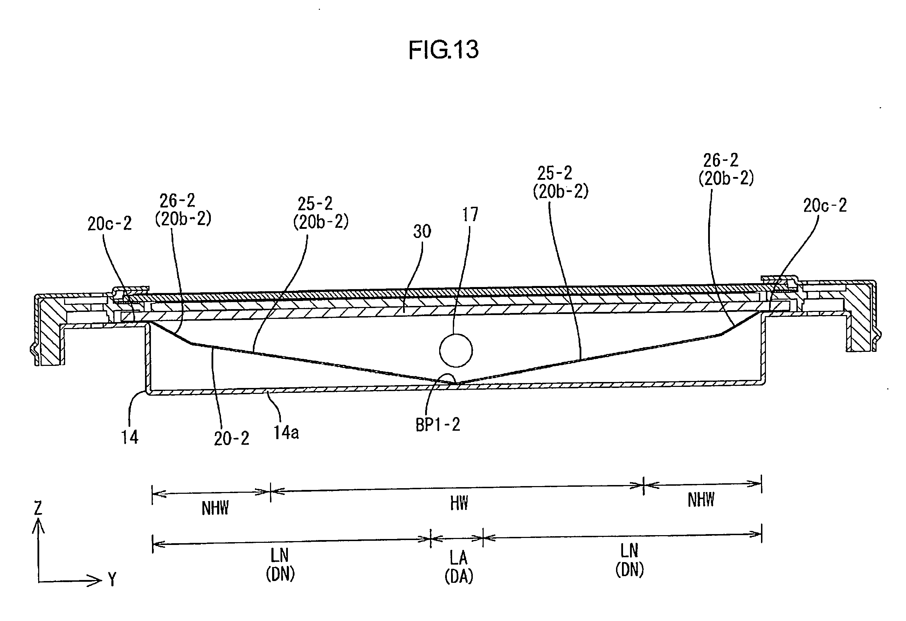

Modification example 2 of the first embodiment will be described with reference to FIG. 13. In the modification example, a reflection sheet 20-2 is modified in shape. FIG. 13 is a cross section view of the liquid crystal display device using the reflection sheet along the shorter side according to the modification example 2 of the first embodiment.

In the reflection sheet 20-2, the bottom portion existing in the first embodiment is eliminated as shown in FIG. 13. Specifically, the reflection sheet 20-2 has a pair of rising portions 20b-2 rising from the bottom plate 14a of the chassis 14 toward the diffuser plate 30 and a pair of extending portion 20c-2 further extending from the distal ends of the rising portions 20b-2. First rising sections 25-2 constituting the rising portions 20b-2 are connected together at base ends, and are approximately V-shaped in cross section cut along the Y-axis direction of the first rising sections 25-2. The first rising sections 25-2 have in common a base end position BP1-2 which is located at almost the same position as the center of the hot cathode tube 17 along the Y-axis direction. Therefore, the base end position BP1-2 of the two first rising sections 25-2 is superimposed on the half-value width region HW in the diffuser plate 30 and is located in the light source arranged region LA. According to the foregoing configuration, light can be efficiently supplied by the rising portions 20b-2 ranging from the half-value width region HW to the non-half-value width regions NHW of the diffuser plate 30, thereby resulting in preferred suppression of uneven brightness.

<Modification example 3 of the first embodiment>

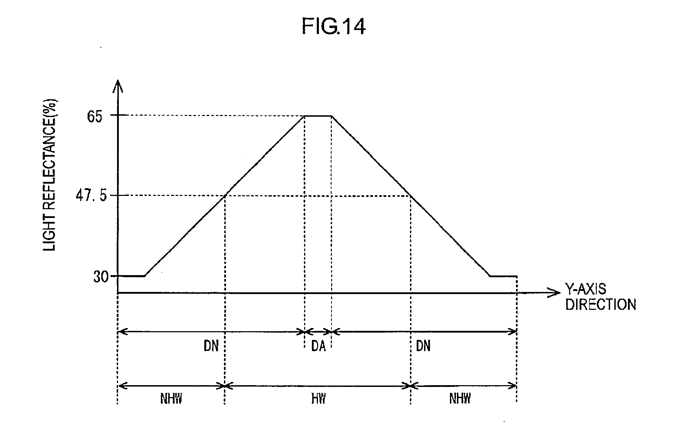

Modification example 3 of the first embodiment will be described with reference to FIG. 14. In the modification example, the first plane 30a of the diffuser plate 30 is modified in distribution of light reflectance. FIG. 14 is a graph showing changes in light reflectance on the diffuser plate along the shorter side according to the modification example 3 of the first embodiment.

In the first plane 30a of the diffuser plate 30, the light source overlapping area DA generally has a uniform light reflectance of 65%, for example, which is the maximum value in the diffuser plate 30, as shown in FIG. 14. Meanwhile, the light source non-overlapping areas DN have a light reflectance that becomes continuously smaller by degrees (in a sloped manner) with increasing distance from the light source overlapping area DA and is 30% which is the minimum value at both ends of the diffuser plate 30 along the shorter side (Y-axis direction). The dots 32a constituting the light reflecting portion 32 are formed so as to be largest and uniform in area in the light source overlapping area DA and become continuously smaller in area by degrees in the light source non-overlapping area DN in inverse proportion to a distance from the light source overlapping area DA.

<Modification example 4 of the first embodiment>

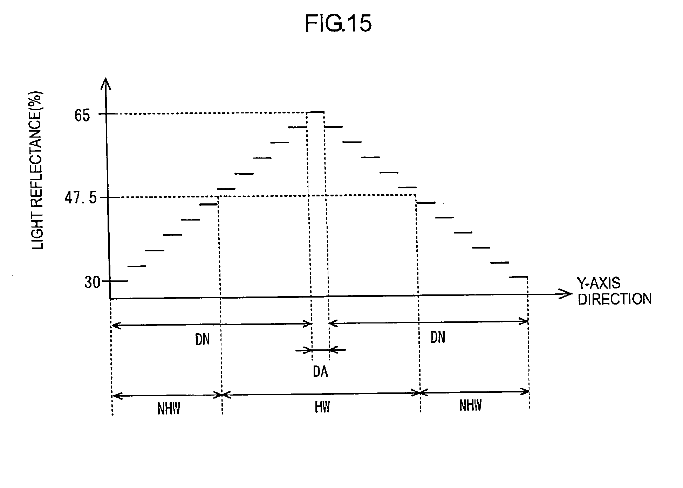

Modification example 4 of the first embodiment will be described with reference to FIG. 15. In the modification example, distribution of light reflectance in the first plane 30a of the diffuser plate 30 is further modified. FIG. 15 is a graph showing changes in light reflectance at the diffuser plate along the shorter side according to the modification example.

The light reflecting portion 32 is formed such that light reflectance on the first plane 30a of the diffuser plate 30 becomes continuously smaller by degrees from the light source overlapping area DA to the light source non-overlapping areas DN as shown in FIG. 15. Specifically, the area of the dots 32a (light reflectance) constituting the light reflecting portion 32 is largest and uniform at the light source overlapping area DA, and becomes continuously smaller by degrees for each predetermined region with increasing distance from the light source overlapping area DA, and is smallest at both end portions of the diffuser plate 30 along the shorter side (in the Y-axis direction). That is, in the light source non-overlapping areas DN of the light reflecting portion 32, the light reflectance changes in a striped shape along the shorter side of the diffuser plate 30 (in the Y-axis direction). This configuration makes it possible to moderate distribution of brightness of illumination light emitted from the diffuser plate 30. Further, according to the means for forming a plurality of regions with stepwise changes in light reflectance, it is possible to simplify the method for manufacturing the diffuser plate 30, thereby contributing to cost reduction.

<Second embodiment>

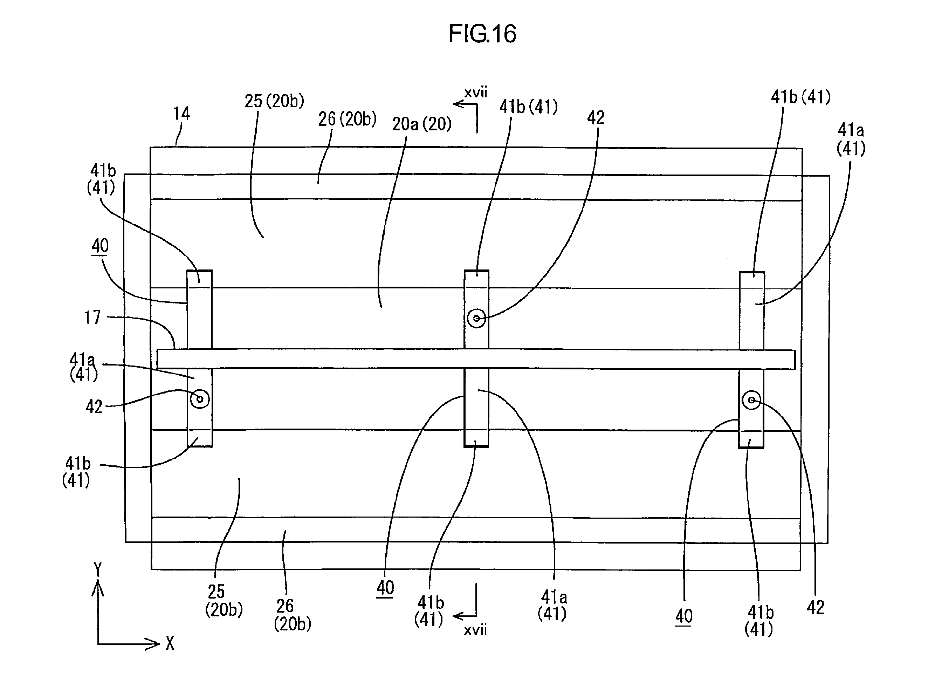

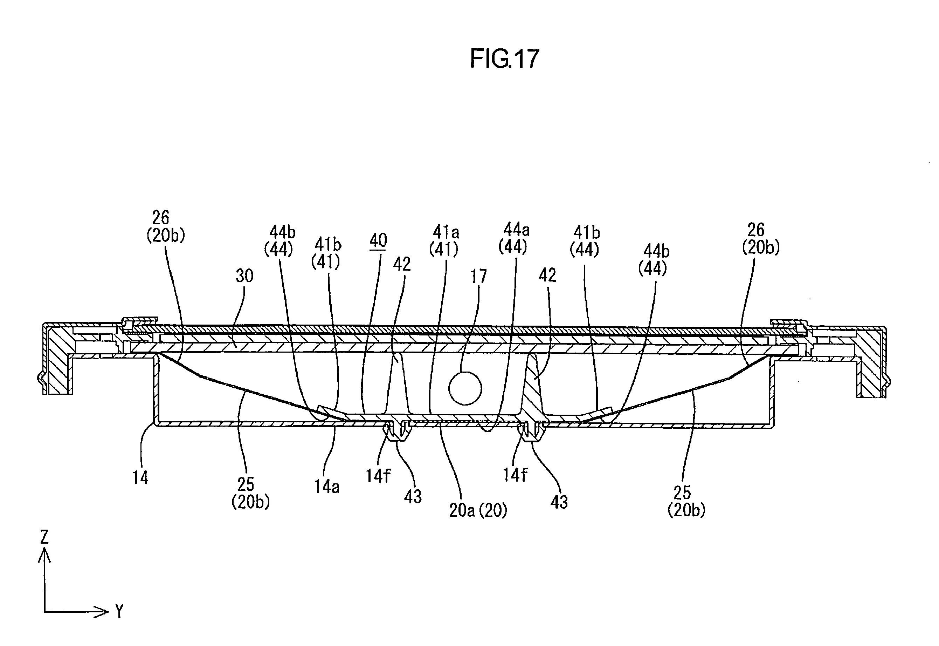

Second embodiment of the invention will be described with reference to FIG. 16 or 17. The second embodiment includes holddown members 40 pressing the reflection sheet 20 from the front side. The same structures, operations and advantages as those in the first embodiment are not described here. FIG. 16 is a plane view of layout of a hot cathode tube, a reflection sheet, and holddown members in a chassis, and FIG. 17 is a cross section view of FIG. 16 taken along line xvii-xvii.

The holddown members 40 are made of synthetic resin (polycarbonate, for example) and each have an entire surface of white-based color such as white excellent in light reflectivity. The holddown members 40 are intermittently disposed in parallel in the chassis 14 at three positions separated from each other along the longer side, as shown in FIG. 16. Specifically, the holddown members 40 are positioned at an approximately center of the chassis 14 along the shorter side, and are positioned at an approximately center and near the both end portions of the chassis 14 along the longer side.

The holddown members 40 each include: a body portion 41 having a pressing surface 44 pressing the reflection sheet 20 from the front side (the light output side); a support portion 42 protruding from the body portion 41 frontward (toward the light output side) and configured to support the diffuser plate 30; and an attachment portion 43 protruding from the body portion 41 backward (toward the side opposite to the light output side and toward the bottom plate 14a of the chassis 14) and configured to attach the holddown member 40 to the chassis 14, as shown in FIG. 17. Of the foregoing portions, the body portions 41 each have a rectangular shape (longitudinal) in a planar view, and are disposed in the chassis 14 so as to have a longer side aligned to the Y-axis direction (along the shorter sides of the chassis 14 and the reflection sheet 20) and have a shorter side aligned to the X-axis direction (along the longer sides of the chassis 14 and the reflection sheet 20). In addition, the longer side dimension of the body portions 41 is larger than the shorter side dimension of the bottom portion 20a of the reflection sheet 20, and the body portions 41 are sized so as to partially reach the rising portions 20b. Accordingly, the body portions 41 are bent in a side view so as to follow the outer shape of the central portion of the reflection sheet 20 along the shorter side (straddling the bottom portion 20a and the both rising portions 20b). The body portions 41 are made symmetrical about the center thereof along the longer side (between the both rising portions 20b).

Specifically, the central parts of the body portions 41 along the longer side are superimposed on the bottom portion 20a in a planar view to constitute bottom portion press portions 41a having bottom pressing surfaces 44a configured to press the bottom portion 20a from the front side, while the both ends of the body portions 41 along the longer side are configured to rise from the bottom portion press portion 41a to the front side, and are superimposed on the both rising portions 20b in a planar view to constitute rising portion press portions 41b having rising portion pressing surfaces 44b configured to press the both rising portions 20b from the front side. That is, the bottom portion press portions 41a and the rising portion press portions 41b have pressing surfaces 44 for the entire surface of the reflection sheet 20. The pressing surfaces 44 are formed to press an area straddling the bottom portion 20a and the both rising portions 20b of the reflection sheet 20. More specifically, the bottom portion press portions 41a each have an almost straight plate shape in parallel to the bottom portion 20a. Meanwhile, the rising portion press portions 41b are sloped with a specific gradient from base ends thereof (on the bottom portion press portion 41a side) to distal ends thereof (on the side opposite to the bottom portion press portion 41a side), and the angle of the inclination (angle of the bending or angle of the rising) is approximately equal to the angle of inclination of the first rising sections 25 with respect to the bottom portion 20a. That is, the angle of rising of the rising portion press portions 41b is preferably an acute angle (not exceeding 90 degrees), more preferably an angle not exceeding 45 degrees, and specifically is about 20 to 30 degrees, for example. In addition, the bottom portion press portions 41a are configured to press the bottom portion 20a across the entire length along the shorter side, whereas the rising portion press portions 41b are configured to press, of the rising portions 20b, parts of the first rising sections 25 (base ends) adjacent to the bottom portion 20a.

The support portions 42 are configured to support the optical member 15 from the back side, that is, from the hot cathode tube 17 side, which makes it possible to regulate constantly a positional relationship (distance and space) between the optical member 15 (the diffuser plate 30, in particular) and the hot cathode tube 17, in the Z-axis direction (orthogonal to the plate surface of the optical member 15). This allows the optical member 15 to exhibit desired optical performance in a stable manner. The support portions 42 are provided at the bottom press portions 41a of the body portions 41, specifically, are disposed eccentrically so as to be closer by one end along the longer side of the bottom portion press portions 41a. In addition, the holddown members 40 are disposed in the chassis 14 along the longer side such that the adjacent support portions 42 are arranged in zigzag alignment (FIG. 16). The support portions 42 are entirely conical in shape along an axial direction aligned to the Z-axis direction (approximately orthogonal to the plate surface of the diffuser plate 30). Specifically, the support portions 42 each have a circular shape in cross section cut along the plate surfaces of the bottom portion press portions 41a, and are tapered with a diameter gradually reduced from the protruding base ends to the protruding leading ends.

The attachment portions 43 are configured to hold the holddown members 40 attached to the chassis 14 by being inserted and locked into attachment holes 14f formed in the bottom plate 14a of the chassis 14. The attachment portions 43 are provided in a pair at each of the bottom portion press portions 41a of the body portions 41. Specifically, the attachment portions 43 in a pair are aligned so as to be separated from each other along the longer side of the bottom portion press portion 41a (along the Y-axis direction). One of the attachment portions 43 in a pair is positioned so as to be superimposed on the support portion 42, more specifically, be coaxial with the support portion 42 on the front side in a planar view. The attachment portions 43 have lock pieces configured to be elastically deformed in the process of being inserted into the attachment holes 14f. When the lock pieces are locked from the back side to the edge portions of the attachment holes 14f, the holddown member 40 can be attached to the chassis 14. The bottom portion 20a of the reflection sheet 20 has insertion holes formed to communicate with the attachment holes 14f and let the attachment portions 43 pass, in correspondence with the attachment holes 14f.

According to the embodiment as described above, the reflection sheet 20 has the bottom portion 20a along the bottom plate 14a, and includes the holddown members 40 that cross the bottom portion 20a and at least the first rising sections 25 of the rising portions 20b and have the pressing surfaces 44 pressing the bottom portion 20a and at least the first rising sections 25 of the rising portions 20b, from the diffuser plate 30 side. Since the rising portions 20b of the reflection sheet 20 are configured to rise from the bottom portion 20a toward the diffuser plate 30, the rising portions 20b tend to be unstable in shape due to variations in angle of rising from the bottom portion 20a or deformation such as warpage or deflection. In this regard, according to the embodiment, the holddown members 40 have the pressing surfaces 44 straddling the bottom portion 20a and at least the first rising sections 25 of the rising portions 20b of the reflection sheet 20, and the pressing surfaces 44 press the bottom portion 20a and at least the first rising sections 25 of the rising portions 20b from the diffuser plate 30 side, which makes it possible to restrict displacement of the rising portions 20b toward the diffuser plate 30. Accordingly, it is possible to suppress variations in angle of rising of the rising portions 20b from the bottom portion 20a and deformation of the rising portions 20b such as warpage or deflection. That is, the rising portions 20b can be held in a stable form to stabilize the direction of light reflected there, which makes it less prone to generate unevenness in light output from the backlight unit 12.

<Third embodiment>

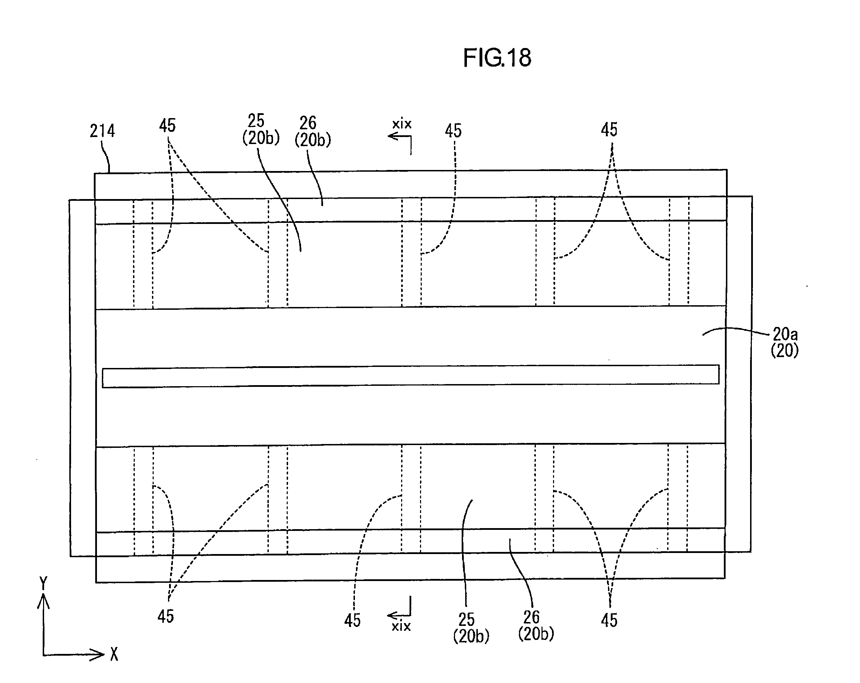

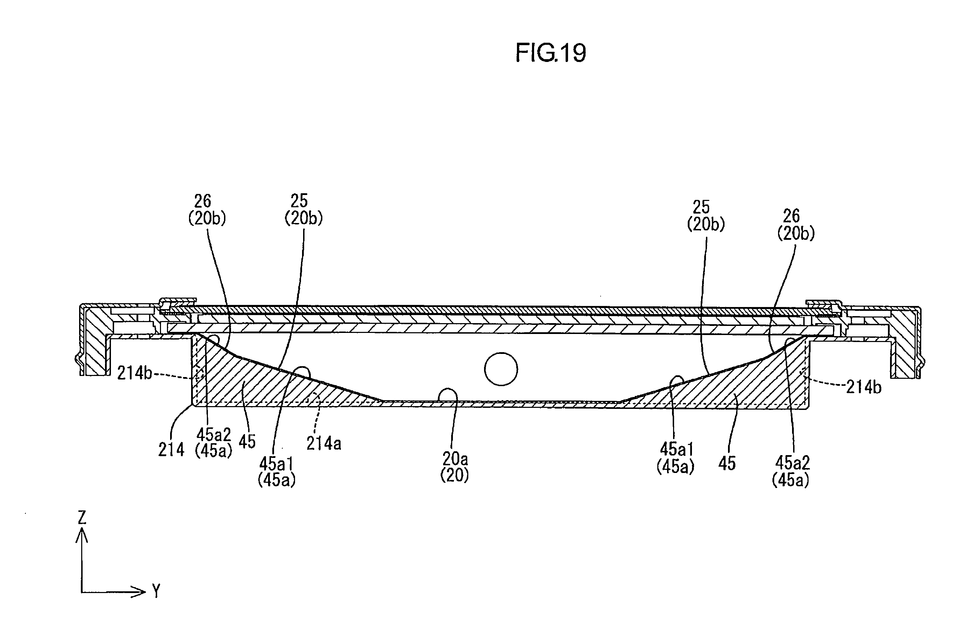

Third embodiment of the invention will be described with reference to FIG. 18 or 19. In the third embodiment, a chassis 214 is modified in shape. The same structures, operations, and advantages as those in the first embodiment are not described here. FIG. 18 is a plane view of layout of a hot cathode tube and a reflection sheet in a chassis, and FIG. 19 is a cross section view of FIG. 18 taken along line xix-xix.

As illustrated in FIGS. 18 and 19, support members 45 are arranged in the chassis 214. The support members 45 support the rising portions 20b of the reflection sheet 20 from the back side (opposite to the light output side). The support members 45 are formed like walls (plates) rising frontward from a bottom plate 214a, and have main wall surfaces (main plate surfaces) along the X-axis direction and have plate thickness along the Y-axis direction. The support members 45 can be said to intervene between the bottom plate 214a and the rising portions 20b. The support members 45 are superimposed on the rising portions 20b of the bottom plates 214a in a planar view. The support members 45 are arranged at five positions separated from each other along the X-axis direction with an almost equal pitch. Of the support members 45, the middle one along the X-axis direction is located at a center of the chassis 214 along the longer side. The support members 45 are approximately triangular in cross section cut along the Y-axis direction so as to follow space (clearance) surrounded by the rising portions 20b, the bottom plate 214a, and side plates 214b. The support members 45 have front surfaces (opposed to the rising portions 20b) sloped with respect to both the bottom plate 214a and the side plates 214b (in the Y-axis direction and the Z-axis direction), which constitute receiving planes 45a configured to receive parts of the rising portions 20b from the back side. The receiving planes 45a extend along (in parallel to) the rising portions 20b and include two-step inclination planes corresponding to the shape of the rising portions 20b. Specifically, the receiving planes 45a include first receiving planes 45a1 in parallel to the first rising sections 25 and second receiving planes 45a2 in parallel to the second rising sections 26. Angle (inclination angle) formed by the first receiving planes 45a1 with respect to the bottom plate 214a (along the Y-axis direction and the direction from the bottom portion 20a to the rising portions 20b) is made approximately equal to the angle between the first rising sections 25 and the bottom plate 214a. Similarly, an angle (inclination angle) formed by the second receiving planes 45a2 with respect to the diffuser plate 30 (along the Y-axis direction and the direction from the bottom portion 20a to the rising portions 20b) is made approximately equal to the angle between the second rising sections 26 and the diffuser plate 30. Accordingly, there is little clearance between the rising portions 20b and the receiving planes 45a of the support members 45. The support members 45 are connected to the inner surfaces of the bottom plate 214a and the side plates 214b, thereby achieving improvement in strength of the chassis 214.

According to the embodiment as described above, the support members 45 are provided between the bottom plate 214a and the rising portions 214b, so as to receive the rising portions 214b from the bottom plates 214a side. Since the rising portions 20b of the reflection sheet 20 are configured so as to rise from the bottom plate 214a toward the diffuser plate 30, the rising portions 20b tend to be unstable in shape due to variations in angle of rising from the bottom plate 214a or deformation such as warpage or deflection. In this regard, according to the embodiment, the support members 45 are configured to receive the rising portions 20b from the bottom plate 214a side, which makes it possible to restrict displacement of the rising portions 20b toward the bottom plate 214a. Accordingly, it is possible to suppress variations in angle of rising of the rising portions 20b from the bottom plate 214a and deformation of the rising portions 20b such as warpage or deflection. That is, the rising portions 20b can be held in a stable form to stabilize the direction of light reflected there, which makes it less prone to generate unevenness in light output from the backlight unit 12.

<Fourth embodiment>

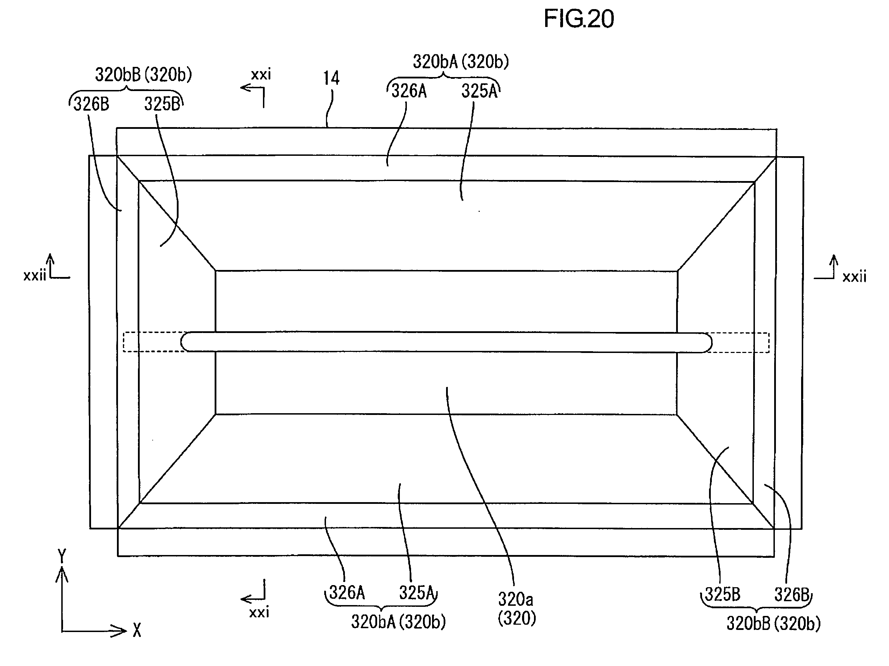

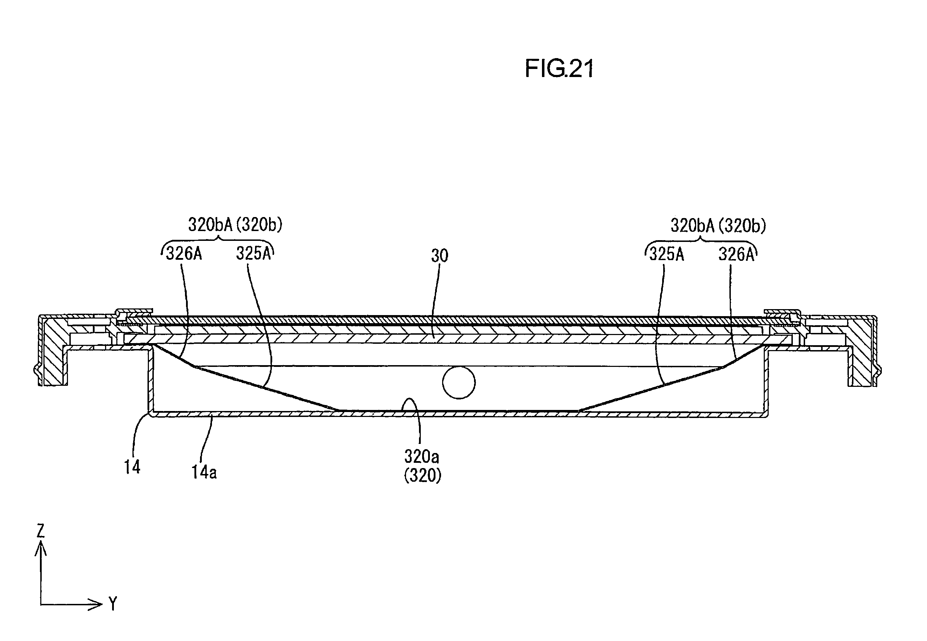

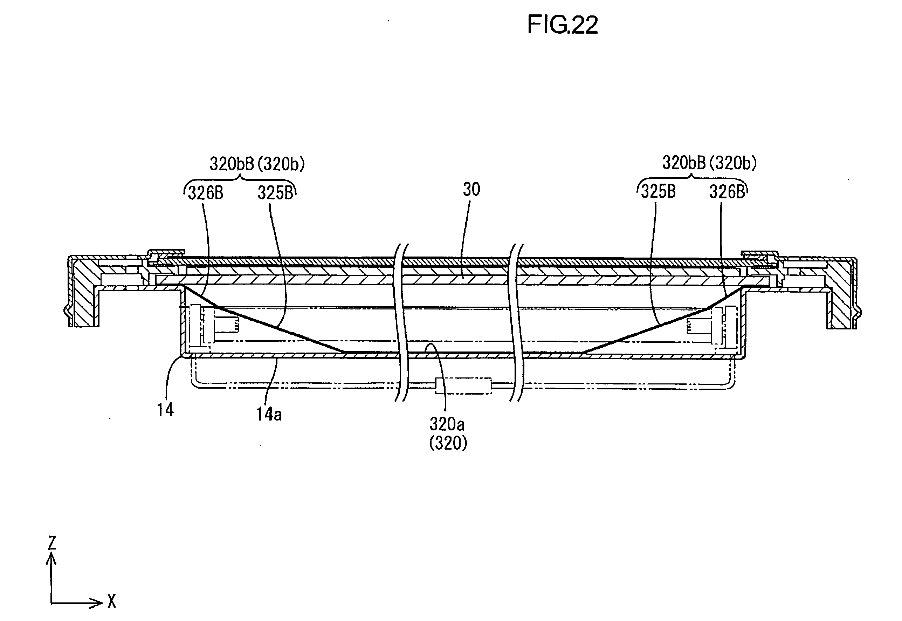

Fourth embodiment of the present invention will be described with reference to FIGS. 20 to 22. In the fourth embodiment, a reflection sheet 320 is modified in shape. The same structures, operations, and advantages as those in the first embodiment are not described here. FIG. 20 is a plane view of layout of a hot cathode tube and a reflection sheet in a chassis, FIG. 21 is a cross section view of FIG. 20 taken along line xxi-xxi, and FIG. 22 is a cross section view of FIG. 20 taken along line xxii-xxii.

The reflection sheet 320 is entirely formed in a bowl-like shape and includes a bottom portion 320a at the center of the bottom plate 14a of the chassis 14 and four rising portions 320b from both end portions of the bottom portion 320a along the longer side and both end portions of the bottom portions 320a along the shorter side, as shown in FIGS. 20 to 22. The rising portions 320b include a pair of longer-side rising portions 320bA that rise from the both ends of the bottom portion 320a along the longer side and sandwich the bottom portion 320a along the Y-axis direction; and a pair of shorter-side rising portions 320bB that rise from the both ends of the bottom portion 320a along the shorter side and sandwich the bottom portion 320a along the X-axis direction and are adjacent to the longer-side rising portions 320bA. The longer-side rising portions 320bA are configured to rise in two steps and include first rising sections 325A and second rising sections 326A. The shorter-side rising portions 320b are configured to rise in two steps, as with the longer-side rising portions 320bA, and include first rising sections 325B and second rising sections 326B. The first rising sections 325A and 325B are connected to each other along the longer side and the shorter side, and the second rising sections 326A and 326B are connected to each other along the longer side and the shorter side, and these rising sections are bent at boundaries therebetween. The diffuser plate 30 used in the embodiment has the same light reflection performance as that of the first embodiment, and therefore, of the longer-side rising portions 320bA and the shorter-side rising portions 320bB, the second rising sections 326A of the longer-side rising portions 320bA can be set to have the base end positions superimposed on the non-half-value width regions.

<Fifth embodiment>

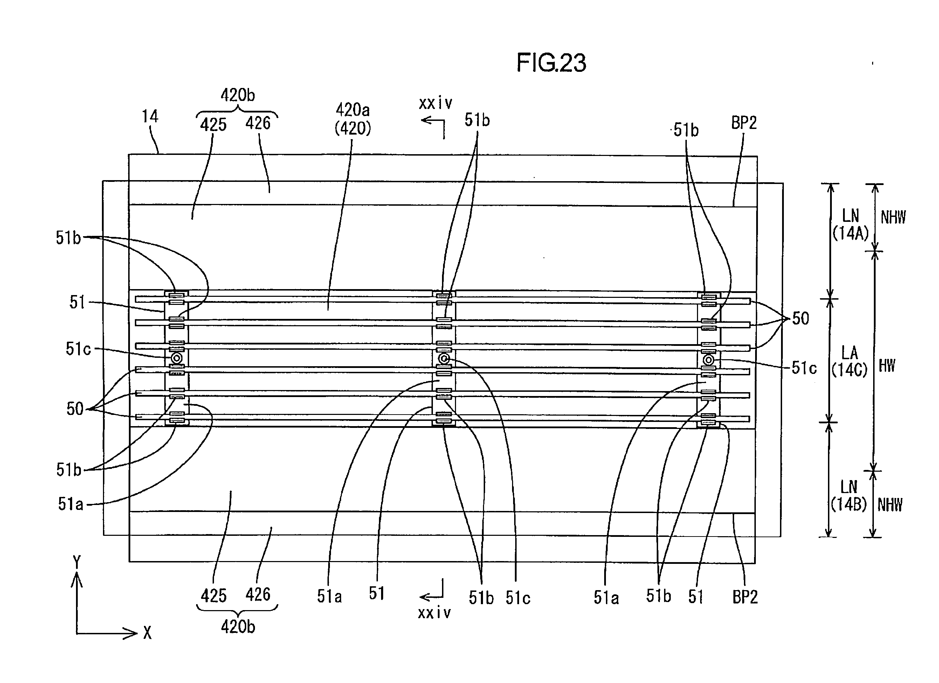

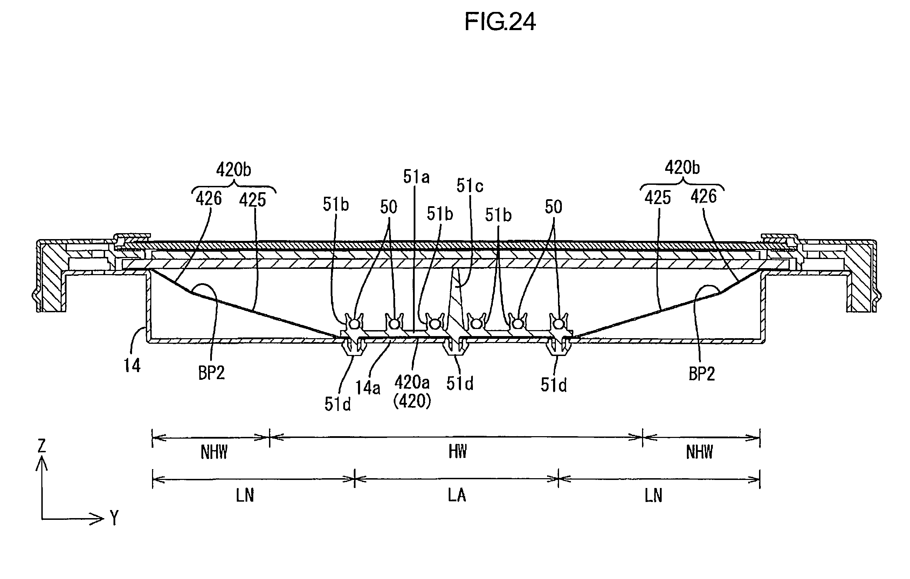

Fifth embodiment of the invention will be described with reference to FIG. 23 or 24. In the fifth embodiment, cold cathode tubes 50 are used as a light source and light source holding members 51 are additionally provided. The same structures, operations, and advantages as those in the first embodiment are not described here. FIG. 23 is a plane view of layout of cold cathode tubes, light source holding members, and a reflection sheet in a chassis, and FIG. 24 is a cross section view of FIG. 23 taken along line xxiv-xxiv.

The cold cathode tubes 50 constituting a light source (linear light source) in the embodiment, are formed in an elongated tubular (linear) shape and each include a hollow elongated glass tube with both ends sealed and a pair of electrodes encapsulated within the both ends of the glass tube as shown in FIGS. 23 and 24. The glass tubes have mercury, rare gas, and the like encapsulated therein, and include inner wall surfaces to which a fluorescent material is applied. The cold cathode tubes 50 have respective relay connectors (not shown) disposed at both ends thereof and connected to lead terminals protruding from the electrodes toward the outside of the glass tubes. The cold cathode tubes 50 are connected via the relay connectors to an inverter board (not shown) attached to the outer surface of the bottom plate 14a of the chassis 14, and are configured to be driven and controlled via the relay connectors. The outer diameter of the cold cathode tubes 50 is about 4 mm, for example, which is smaller than the outer diameter of the hot cathode tubes 17 described above in relation to the first embodiment (about 15.5 mm, for example).

The thus structured cold cathode tubes 50 are stored eccentrically in the chassis 14 so as to have a longer side (in an axial direction) aligned to the longer side of the chassis 14 and be arranged in parallel at six positions at predetermined intervals (arrangement pitch). More specifically, assuming that the bottom plate 14a of the chassis 14 (opposed to the diffuser plate 30) is divided into a first end portion 14A along the shorter side, a second end portion 14B positioned opposite to the first end portion 14A, and a central portion 14C sandwiched between the first and second end portions, the cold cathode tubes 50 are disposed at the central portion 14C of the bottom plate 14a, thereby to form the light source arranged region LA. The light source arranged region LA according to the embodiment is wider than that in the first embodiment. Meanwhile, the cold cathode tubes 50 are not disposed in the first end portion 14A and the second end portion 14B of the bottom plate 14a, thereby to form the light source non-arranged regions LN. That is, the cold cathode tubes 50 form the light source arranged region LA eccentric to the central portion of the bottom plate 14a of the chassis 14 along the shorter side, and the area of the light source arranged region LA is larger than the area of each of the light source non-arranged regions LN. Further, the ratio of the area of the light source arranged region LA (the length along the Y-axis direction) to the area of the entire screen (the vertical dimension of the screen (shorter side dimension)) is about 42%, for example, which is larger than that in the first embodiment. The light source non-arranged regions LN in a pair are almost the same in area. In addition, the cold cathode tubes 50 are formed almost equal in length to the horizontal dimension of the screen (longer side dimension).

Bottom portion 420a of a reflection sheet 420 is slightly larger in shorter side dimension than the light source arranged region LA of the bottom plate 14a of the chassis 14, and is superimposed on the light source arranged region LA in a planar view. That is, the bottom portion 420a is extended in formation range according to the light source arranged region LA, whereas rising portions 420b are reduced in formation range in correspondence with the light source non-arranged regions LN. Therefore, an angle between first rising sections 425 of the rising portions 420b and the bottom portion 420a is larger than that in the first embodiment, and accordingly, an angle between second rising sections 426 and the diffuser plate 430 is also larger than that in the first embodiment. Meanwhile, the half-value-width region HW of the diffuser plate 430 is extended due to the extension of the light source arranged region LA and the bottom portion 420a, whereas the non-half-value width regions NHW are reduced in width. In addition, the base end positions BP2 of the second rising sections 426 are superimposed on the non-half-value width regions NHW, as with the first embodiment.

The light source holding members 51 holding the cold cathode tubes 50 are attached to the bottom plate 14a of the chassis 14. The light source holding members 51 each include a body portion 51a configured to sandwich the bottom portion 420a with the bottom plate 14a; light source holding portions 51b protruding frontward from the body portion and configured to hold the cold cathode tube 50; a support portion 51c protruding frontward from the body portion 51a and configured to support the diffuser plate 430 from the back side; and attachment portions 51d protruding backward from the body portion 51a and attached to the bottom plate 14a. Of the foregoing portions, the light source holding portions 51b are arranged in parallel at six positions at predetermined intervals on the body portion 51a along the longer side, and the arrangement pitch of the light source holding portions 51b is the same as the arrangement pitch of the cold cathode tubes 50. The light source holding portions 51b each have a pair of arms, and the cold cathode tubes 50 are each attached or detached through space between leading ends of the arms. The both arms are configured to be elastically deformed while being opened outward on attachment or detachment of the cold cathode tube 50, and are configured to hold elastically the cold cathode tube 50 therebetween. The light source holding portions 51b make it possible to hold the cold cathode tubes 50 in a straight state along the axial direction and maintain a uniform positional relationship between the cold cathode tubes 50 and the diffuser plate 430 along the Z-axis direction.

The body portions 51a are configured in almost the same manner as the bottom portion press portions 41a of the holddown members 40 in the second embodiment as described above (refer to FIG. 17). The support portions 51c are configured in almost the same manner as the support portions 42 of the holddown members 40 in the second embodiment described above (refer to FIG. 17). The attachment portions 51d are configured in almost the same manner as the attachment portions 43 of the holddown members 40 in the second embodiment described above (refer to FIG. 17). Accordingly, overlapped descriptions of these portions are not repeated here.

According to the embodiment as described above, the light source is formed by the cold cathode tubes 50. This achieves longer lifetime of the light source and facilitates light regulation.

<Sixth embodiment>

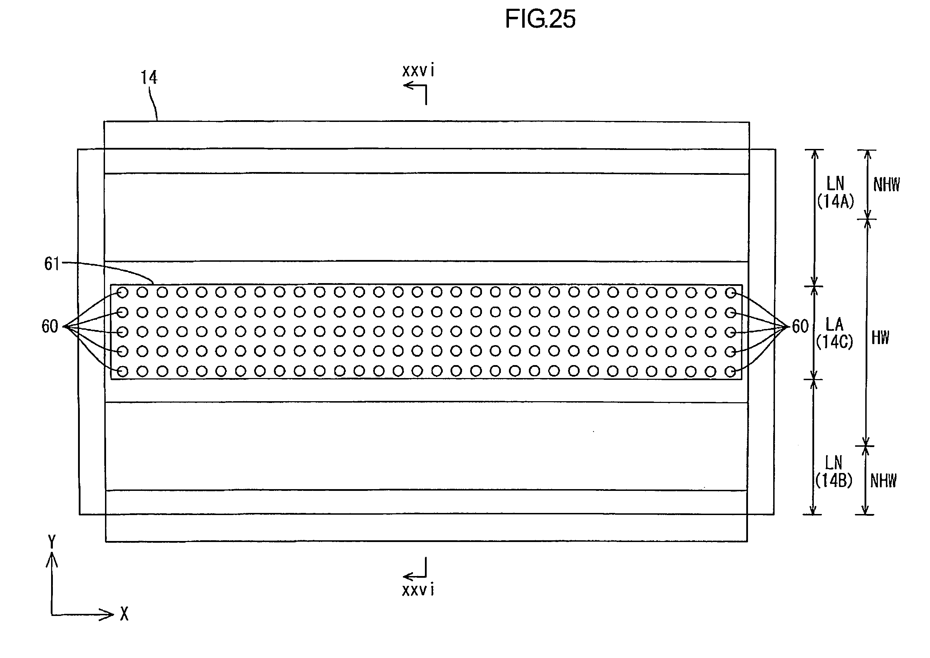

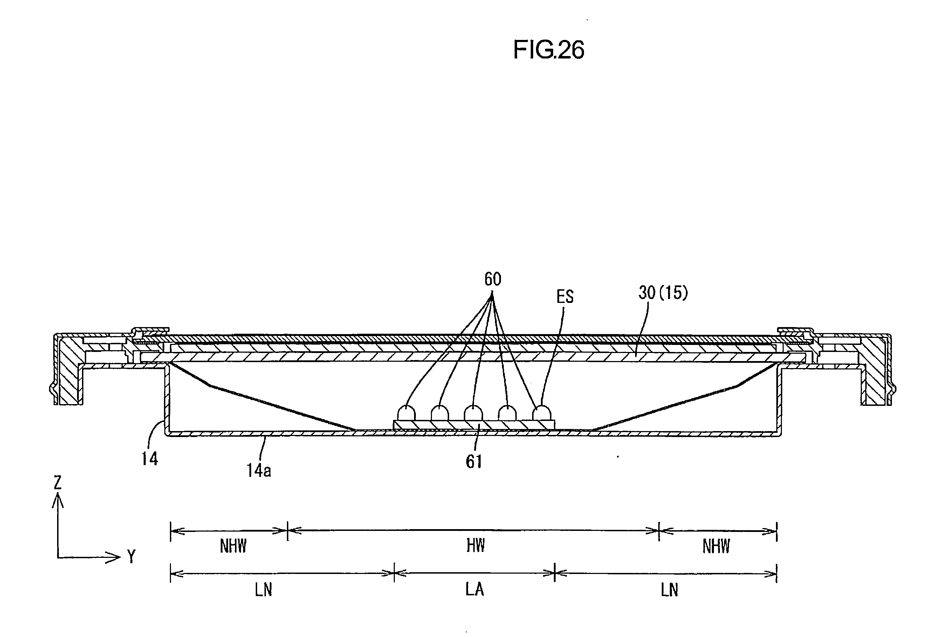

Sixth embodiment of the invention will be described with reference to FIG. 25 or 26. In the sixth embodiment, LEDs 60 are used as a light source. The same structures, operations, and advantages as those in the first embodiment are not described here. FIG. 25 is a plane view of layout of LEDs and a reflection sheet in a chassis, and FIG. 26 is a cross section view of FIG. 25 taken along line xxvi-xxvi.

In the embodiment, a large number of LEDs 60 as a light source are mounted on an LED substrate 61 stored in the chassis 14, thereby to constitute a linear light source extending along the X-axis direction as a whole, as shown in FIGS. 25 and 26. The LED substrate 61 is made of synthetic resin, and has a surface of a white color excellent in light reflectivity, and is fixed to the bottom plate 14a of the chassis 14 by a fixing means not shown. The LED substrate 61 extends along the bottom plate 14a of the chassis 14, and has a horizontally long rectangular shape in a planar view, and is attached to the bottom plate 14a so as to have a longer side aligned to the longer side of the chassis 14. The shorter side dimension of the LED substrate 61 is smaller than the vertical dimension of the screen (the shorter side dimension of the chassis 14), and the longer side dimension of the LED substrate 61 is almost equal to the horizontal dimension of the screen (the longer side dimension of the chassis 14). In addition, the LED substrate 61 has a wiring pattern formed by a metal film on which the LEDs 60 are mounted at predetermined positions. The LED substrate 61 is connected to an external control substrate not shown from which power needed for illumination of the LEDs 60 is supplied to drive and control the LEDs 60.

The LEDs 60 are so-called surface-mounted components that are mounted on the surface of the LED substrate 61, and are numerously arranged in parallel on the front side of the LED substrate 61 in a grid-like pattern (in a matrix) along the X-axis direction and the Y-axis direction. The LEDs 60 are configured such that LED chips are encapsulated by means of a resin material on a substrate portion fixed to the LED substrate 61. The LED chips mounted on the substrate portion are classified under three types with different main emission wavelengths. Specifically, each of the LED chips emits single light of R (red), G (green), or B (blue). The LEDs 60 are a top type in which the surface of the LEDs 60 opposite to the surface of the same mounted on the LED substrate 61 constitutes the light-emitting surface ES. Optical axis of the LEDs 60 is almost aligned to the Z-axis direction (the direction orthogonal to the plate planes of the liquid crystal panel 11 and the optical member 15).

Assuming that the bottom plate 14a of the chassis 14 (opposed to the diffuser plate 30) is evenly divided along the shorter side into the first end portion 14A, the second end portion 14B positioned opposite to the first end portion 14A, and the central portion 14C sandwiched between the first and second end sections, the LED substrate 61 with the LEDs 60 numerously mounted is disposed at the central portion 14C of the bottom plate 14a, thereby to form the light source arranged region LA. Meanwhile, the LED substrate 61 is not disposed at the first end portion 14A and the second end portion 14B of the bottom plate 14a, thereby to form the light source non-arranged region LN. That is, the LEDs 60 and the LED substrate 61 form the light source arranged region LA eccentric to the central portion of the bottom plate 14a of the chassis 14 along the shorter side. In addition, the ratio of the area of the light source arranged region LA (the length along the Y-axis direction) to the area of the entire screen (the vertical dimension (shorter side dimension) of the screen) can be set as appropriate. The ratio may be identical to that in the first embodiment or the fourth embodiment, or may be set at a value other than those in the first and fourth embodiments.

According to the embodiment as described above, the light source is formed by the LEDs 60. This achieves longer lifetime and low power consumption of the light source.

Although the sixth embodiment of the invention is as described above, the invention is not limited to the foregoing embodiment, and may include modification examples as described below. In the following modification examples, some of the same members as those in the foregoing embodiment are given the same reference numerals as those in the

foreground embodiment, and thus are not shown or described below.

<Modification example 1 of the sixth embodiment>

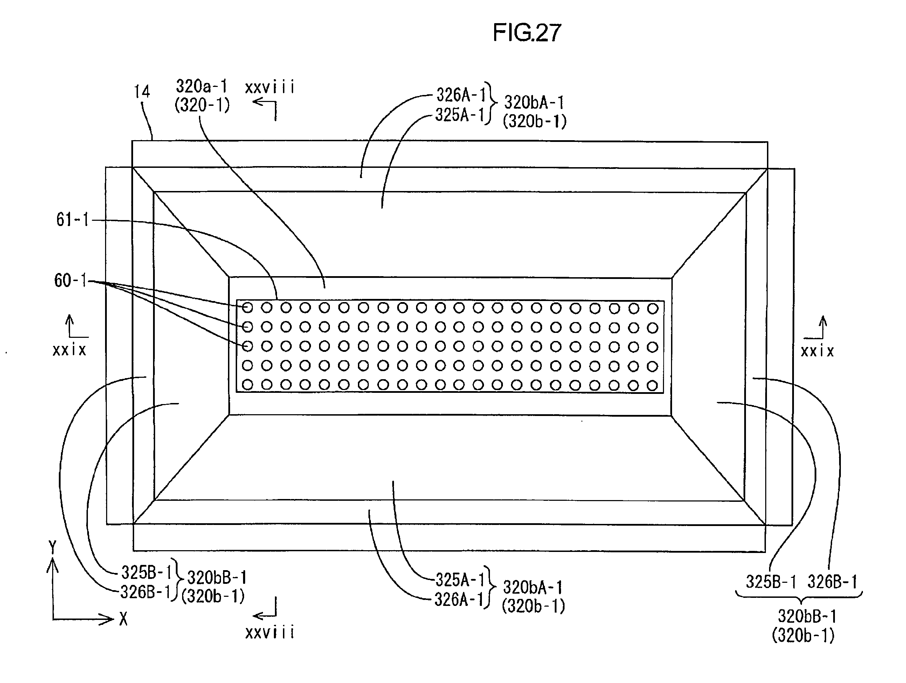

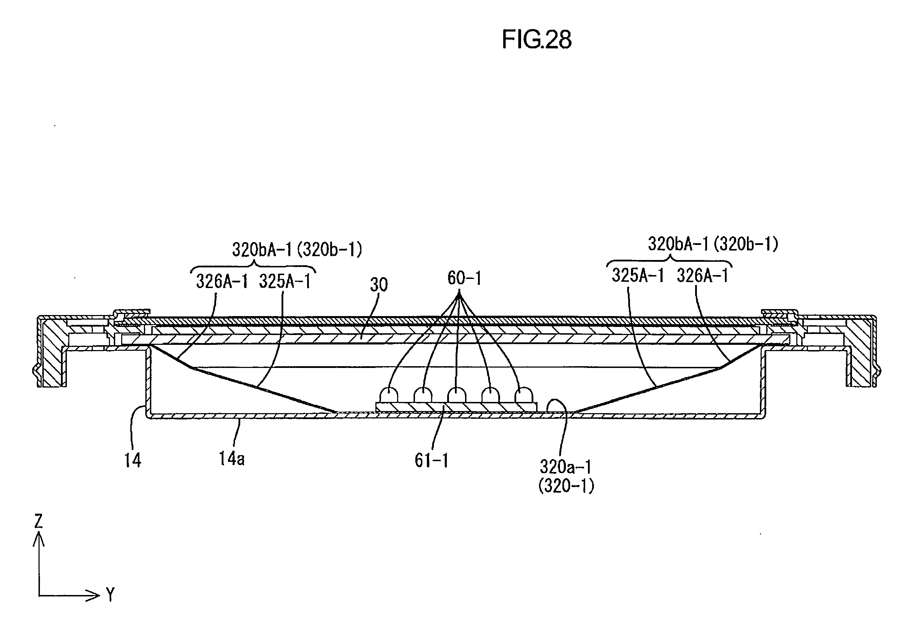

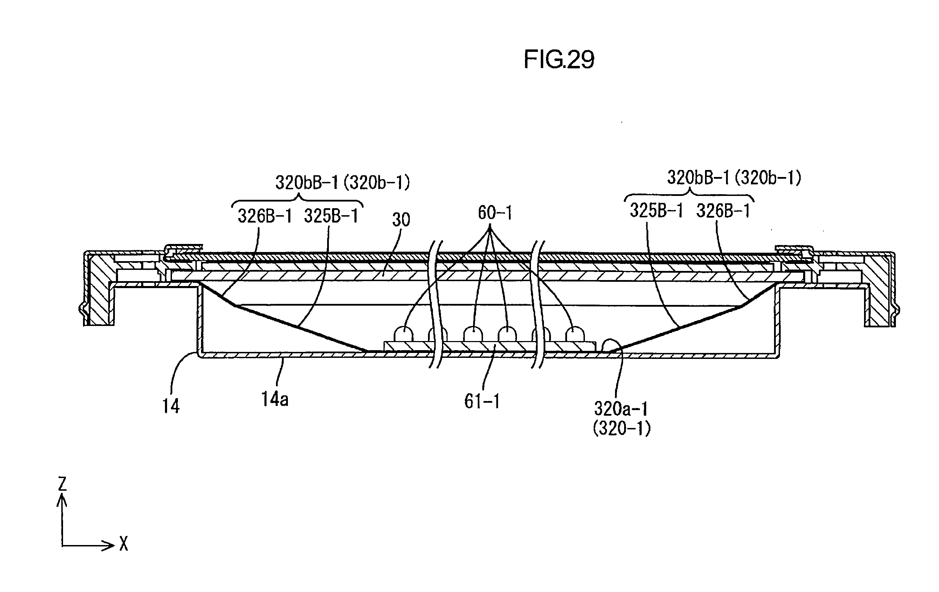

Modification example 1 of the sixth embodiment will be described with reference to FIGS. 27 to 29. In the modification example 1, the reflection sheet 320-1 in the sixth embodiment is modified in shape in the same manner as the fourth embodiment. The same structure, operations, and advantages as those in the first and fourth embodiments are not described here. FIG. 27 is a plane view of layout of a hot cathode tube and a reflection sheet in a chassis, FIG. 28 is a cross section view of FIG. 27 taken along line xxviii-xxviii, and FIG. 29 is a cross section view of FIG. 27 taken along line xxix-xxix.

The reflection sheet 320-1 is entirely formed in a bowl-like shape, and includes a bottom portion 320a-1 disposed at the center of the bottom plate 14a of the chassis 14 and four rising portions 320b-1 from both end portions of the bottom portion 320a-1 along the longer side and both end portions of the bottom portions 320a-1 along the shorter side, as shown in FIGS. 27 to 29. The rising portions 320b-1 include a pair of longer-side rising portions 320bA-1 and a pair of shorter-side rising portions 320bB-1. The longer-side rising portions 320bA-1 are configured to rise in two steps and include first rising sections 325A-1 and second rising sections 326A-1. The shorter-side rising portions 320b-1 are configured to rise in two steps, as with the longer-side rising portions 320bA-1, and include first rising sections 325B-1 and second rising sections 326B-1. The bottom portion 320a-1 is reduced in size along the longer side direction (the X-axis direction) due to provision of the shorter-side rising portions 320bB-1, as compared to that in the sixth embodiment. In contrast to this, a LED substrate 61-1 is sized so as to cover the almost entire area of the bottom portion 320a-1. Therefore, the LED substrate 61-1 is made smaller in size along the longer side in a planar view as compared to the sixth embodiment, thereby achieving cost reduction. According to this, the number of LEDs 60-1 is decreased but light can be efficiently guided to the diffuser plate 30 by the rising portions 320bA-1 and 320bB-1, which makes it possible to obtain sufficient desired brightness.

<Seventh embodiment>

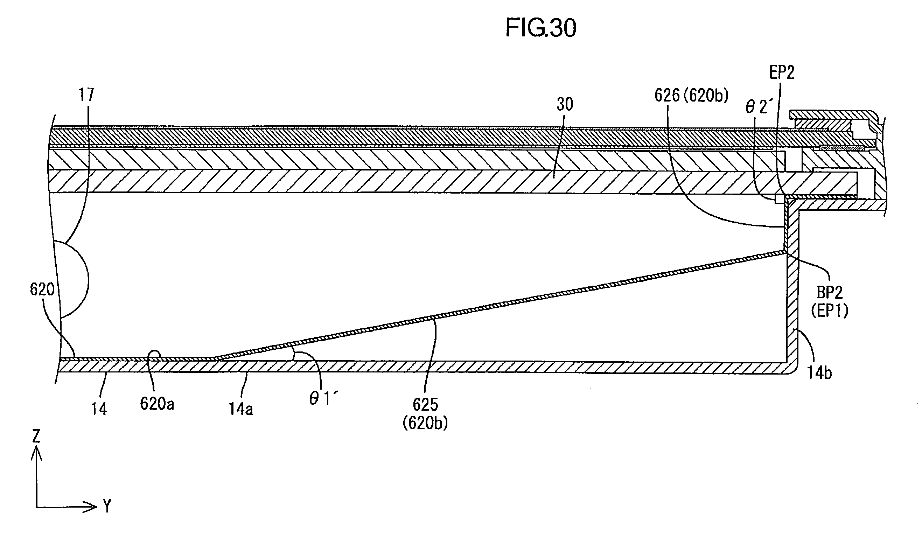

Seventh embodiment of the invention will be described with reference to FIG. 30. In the seventh embodiment, a reflection sheet 620 is modified in shape. The same structures, operations, and advantages as those in the first embodiment are not described here. FIG. 30 is a cross section view of a liquid crystal display device using a reflection sheet along a shorter side according to the embodiment of the invention.

Rising portions 620b include first rising sections 625 forming an acute angle $\theta1'$ with respect to a bottom portion 620a (bottom plate 14a) and second rising sections 626 forming an approximately right angle $\theta2'$ with respect to the diffuser plate 30 as shown in FIG. 30. Specifically, the angle $\theta1'$ of rising of the first rising sections 625 from the bottom portion 620a is set gentler than that of the first rising sections 25 in the first embodiment, and distal ends of the first rising sections 625 reach the bottom plate 14b of the chassis 14. From the distal ends of the first rising sections 625, the second rising sections 626 extend frontward along the side plates 14b, that is, the second rising sections 626 rise almost vertically toward the diffuser plate 30, and distal ends of the second rising sections 626 reach the diffuser plate 30. Therefore, there is left space adapted to at least the length of the second rising sections 626 between the distal ends of the first rising sections 625 and the outer edge of the diffuser plate 30, and there is left space wider than the length of the second rising sections 626 between the leading ends of the first rising sections 625 and the outer edge of the diffuser plate 30. This further facilitates entry of light into the outer edge of the diffuser plate 30, which makes it further less prone to generate local dark sections. In addition, the distal end positions EP1 of the first rising sections 625, the base end positions BP2 of the second rising sections 626, and the distal end positions EP2 of the second rising sections 626, are located at almost the same position along the Y-axis direction.

According to the embodiment as described above, the first rising sections 625 are formed such that the space between the first rising sections 625 and the diffuser plate 30 becomes smaller with increasing distance from the hot cathode tube 17, and the first rising sections 625 are sloped. The first rising sections 625 form the acute angle $\theta1'$ with respect to the bottom plate 14a, whereas the second rising sections 626 form the approximately right angle $\theta2'$ with respect to the diffuser plate 30. Quantity of light in the chassis 14 tends to be smaller with increasing distance from the hot cathode tube 17. In contrast to this, when the space between the first rising sections 625 and the diffuser plate 30 are smaller with increasing distance from the hot cathode tube 17, the length of a light path from the first rising sections 625 to the diffuser plate 30 tends to be proportional to the quantity of light in the chassis 14. Since light can be guided more efficiently to the diffuser plate 30 with the shorter length of the light path, the first rising sections 625 allow light to be guided evenly to the diffuser plate 30. In addition, the first rising sections 625 are sloped and configured to form the acute angle $\theta1'$ with respect to the bottom plate 14a, thereby achieving efficient guidance of light to the diffuser plate 30. Meanwhile, the second rising sections 626 are configured to rise at an approximately right angle from the distal ends of the first rising sections 625 toward the diffuser plate 30, and therefore there is left space larger than the length of the second rising sections 626 between the distal ends of the first rising sections 625 and the diffuser plate 30. This makes it less prone to generate local dark sections at parts of the diffuser plate 30 corresponding to the distal ends and their proximities of the second rising sections 626.

<Eighth embodiment>

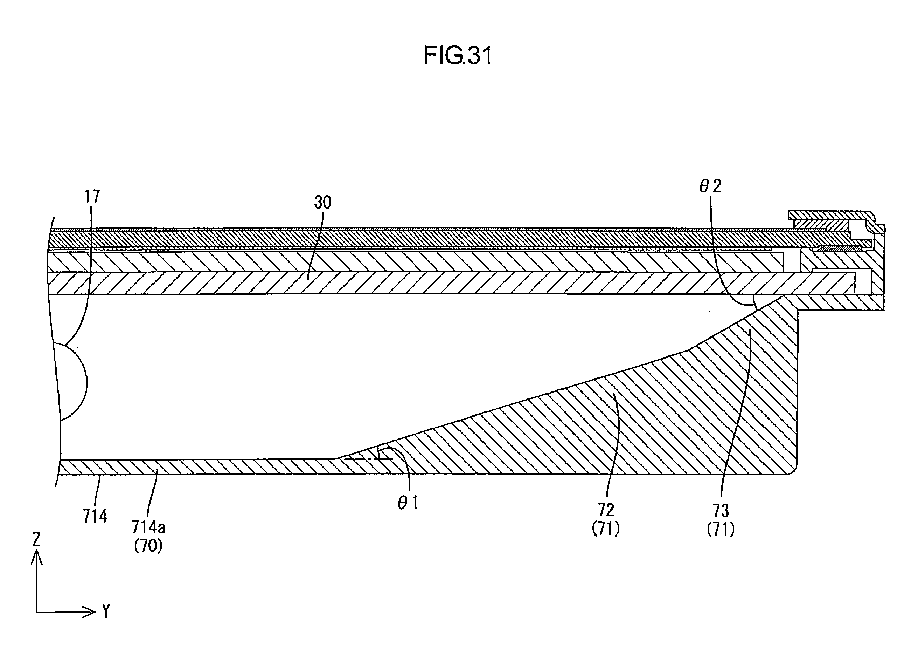

Eighth embodiment of the invention will be described with reference to FIG. 31. In the eighth embodiment, no reflection sheet is provided and a chassis 714 is configured to perform the feature of light reflection. The same structures, operations, and advantages as those in the first embodiment are not described here. FIG. 31 is a cross section view of a liquid crystal display device along the shorter side.

The chassis 714 is made of polycarbonate and has a surface of a white color excellent in light reflectivity (with high light reflectance) as shown in FIG. 31. Therefore, the chassis 714 efficiently reflects light therein by its inner surface opposed to the hot cathode tube 17 and the diffuser plate 30, and enters the reflected light into the diffuser plate 30. That is, the almost entire area of the inner surface of the chassis 714 constitutes a light reflecting plane with respect to the diffuser plate 30, thereby performing also the feature of the reflection sheet 20 in the first embodiment. Bottom plate 714a of the chassis 714 includes integrally a bottom portion 70 extending in parallel to the plate plane of the diffuser plate 30 and rising portions 71 rising toward the front side (the diffuser plate 30 side). The bottom portion 70 is disposed at an approximately center of the chassis 14 along the Y-axis direction, whereas the rising portions 71 are disposed in a pair at both end portions of the chassis 714 along the Y-axis direction. The rising portions 71 are configured to rise in two steps and have first rising sections 72 with base ends on the bottom plate 714a as a base point and second rising sections 73 with distal ends reaching the diffuser plate 30. Angle $\theta2$ formed by the second rising sections 73 with respect to the diffuser plate 30 is larger than an angle $\theta1$ formed by the first rising sections 71 with respect to the bottom plate 714a. The first rising sections 72 and the second rising sections 73 are formed over the almost entire length of the chassis 714 along the X-axis direction.

The configurations, operations, and advantages of the bottom portion 70 and the rising portions 71 according to the embodiment are the same as those in the first embodiment, and therefore are not described here. In addition, positional relationships between the bottom portion 70 and the rising portions 71, between the light source arranged region and the light source non-arranged regions in the chassis 714, and between the half-value width region and the non-half-value width regions in the diffuser plate 30 according to the embodiment, are the same as those in the first embodiment, and therefore are not described here.

According to the embodiment as described above, the reflection member is integrated with the chassis 714. This makes it possible to reduce parts count and man-hours for assembly. In addition, the chassis 714 including integrally the reflection member is made of polycarbonate, which is advantageous in setting a high light reflectance on the surface of the reflection member.

<Other embodiments>

The invention is not limited to the embodiments described in the foregoing text and the drawings. The following embodiments are also included in the technical scope of the invention, for example.

(1) Both the example and the comparative example described using Table 1 and FIG. 11 in the first embodiment, have characteristic structures of the invention and produce advantages of the invention at a specific level or more. Therefore, the example and the comparative example fall within the invention as a matter of course. That is, the invention also includes a configuration in which the base end positions of the second rising sections are superimposed on the half-value-width region of the diffuser plate, as in the comparative example.

(2) Table 1 and FIG. 11 describe the first embodiment where the two kinds of diffuser plates with different ratios of the half-value width region and the non-half-value with regions. Alternatively, the invention may use two kinds of reflection sheets with a difference in the base end positions of the second rising sections (the distal end positions of the first rising sections) of the rising portions, for example. Even in this case, it is considered that, when the example in which the base end positions of the second rising sections are superimposed on the non-half- value width regions of the diffuser plate is compared to the comparative example in which the base end positions of the same are superimposed on the half-value width region, the same results as those in the first embodiment will be obtained.

(3) In the modification example 1 of the first embodiment, the angle between the third rising sections and the bottom plate or the diffuser plate is set between the angle between the first rising sections and the angle between the second rising sections. Alternatively, the angle between the third rising sections may be smaller than the angle between the first rising sections, or in reverse, the angle between the third rising sections may be larger than the angle between the second rising sections.

(4) In the modification example 1 of the first embodiment, the rising portions are configured to rise in three steps. Besides, the invention also includes an embodiment with rising portions configured to rise in four or more steps.

(5) In the foregoing embodiments, the rising portions are sloped. However, the rising portions can be modified in shape as appropriate. For example, the rising portions may have an arc shape or a curved shape other than an arc shape (quadratic curve shape, oval shape, or the like) in cross section.

(6) In the foregoing embodiments, the distal end positions of the first rising sections are superimposed on the non-half-value width regions of the diffuser plate, and the base end positions of the first rising sections are superimposed on the half-value width region. Besides, the invention also includes an embodiment where the distal end positions and base end positions of the first rising sections are both superimposed on the half-value width region of the diffuser plate and an embodiment where the distal end positions and base end positions of the first rising sections are both superimposed on the non-half-value width regions of the diffuser plate.

(7) In the foregoing embodiments, the entire rising portions are disposed in the light source non-arranged regions. Besides, the invention also includes an embodiment where the rising portions are partially disposed in the light source arranged region. In this case, out of the rising portions, the first rising sections may be partially disposed in the light source arranged region, or the second rising sections may be partially disposed in the light source arranged region.

(8) In the foregoing embodiments, the first rising sections and the second rising sections form acute angles less than 45 degrees or less along the Y-axis direction. Besides, the invention also includes an embodiment where the angles are acute angles of 45 degree or more.

(9) In the foregoing first to third and fifth to eighth embodiments, the rising portions are disposed only at the end portions of the reflection sheet along the shorter side. Besides, the invention is also applicable to an embodiment where the rising portions are disposed only at the end portions of the reflection sheet along the longer side. In addition, the invention can also be applied to an embodiment where the rising portions having a chevron shape in cross section are provided at the central portions of the reflection sheet, for example.

(10) In the foregoing second embodiment, the rising portion press portions of the holddown members press partially the first rising sections. Besides, the present invention also includes an embodiment where the rising portion press portions press the entire first rising sections and the partial second rising sections, and an embodiment where the rising portion press portions press the entire rising portions, for example.

(11) The holddown members in the foregoing second embodiment can also be used in the modification examples 1 and 2 of the first embodiment, and the third to seventh embodiments, as a matter of course. In addition, the rising portion press portions in the foregoing second embodiment can also be provided to the body portions of the light source holding members in the foregoing fifth embodiment.

(12) The support members in the foregoing third embodiment can also be used in the modification examples 1 and 2 of the first embodiment, and the second and fourth to seventh embodiments.

(13) In the foregoing embodiments, the chassis is made of synthetic resin. Besides, the invention is also applicable to an embodiment where the chassis is made of metal.

(14) In the foregoing embodiments, the reflection sheet is configured to have the bottom portion and the rising portions connected to each other. Besides, the invention is also applicable to an embodiment where a reflection sheet is configured to have a separation structure where the bottom portion and the rising potions are separated.

(15) In the foregoing fourth embodiment, the cold cathode tubes in the fifth embodiment may be used or the LEDs in the sixth embodiment may be used, as a light source.

(16) In the foregoing first embodiment, the one hot cathode tube is used as a light source. However, the number of the hot cathode tube(s) can be changed and may be two or more. Specifically, if two hot cathode tubes are used, for example, the ratio of the light source arranged region to the vertical dimension of the screen is preferably about 37%, for example. Even in the case of using three or more hot cathode tubes, the ratio of the light source arranged region can also be adjusted in proportion to the number of the hot cathode tubes.

(17) In the foregoing fifth embodiment, the six cold cathode tubes are used as a light source. However, the number of cold cathode tubes can be changed and may be five or less or seven or more. Specifically, in the case of using four cold cathode tubes, for example, the ratio of the light source arranged region to the vertical dimension of the screen is preferably about 26%, for example. In addition, in the case of using eight cold cathode tubes, for example, the ratio of the light source arranged region to the vertical dimension of the screen is preferably about 58%, for example. Even in the cases where the number of cold cathode tubes to be used is changed otherwise, the ratio of the light source arranged region can also be adjusted in proportion to the number of the cold cathode tubes.

(18) In the foregoing sixth embodiment, the size of the LED substrate with respect to the chassis, the positions and number of the LEDs to be mounted on the LED substrate, and the like, may be modified as appropriate.

(19) In the foregoing embodiments, the central portion of the chassis is set as light source arranged region, and the first and second end portions of the same are set as light source non-arranged regions. Besides, the invention also includes an embodiment where at least either of the first and second end portions in the chassis is set as a light source arranged region, and the other is set as a light source non-arranged region. In this case, the first end portion and the central portion may be set as a light source arranged region, or the second end portion and the central portion may be set as a light source arranged region.

(20) In the foregoing embodiments, the light source is eccentrically disposed in the chassis (including the light source arranged region and the light source non-arranged regions). Besides, the invention is also applicable to an embodiment where the light source is evenly disposed over the entire chassis.

(21) In the foregoing first to fifth, seventh, and eighth embodiments, a hot cathode tube or cold cathode tubes, which are a kind of fluorescent tube (linear light source), are used as a light source. Besides, the invention also includes an arrangement using any other kind of fluorescent tube. In addition, the invention also includes an arrangement using discharge tubes of kinds other than fluorescent tubes (such as mercury lamps).

(22) In the foregoing sixth embodiment, the LEDs, which are a kind of point light source, are used as a light source. Besides, the invention also includes an arrangement using any other kind of point light source. Alternatively, a planar light source such as organic ELs may be used in the invention.

(23) In the foregoing embodiments, one kind of light source is used. Besides, the invention also includes an arrangement using in mixture a plurality of kinds of light sources. Specifically, hot cathode tubes and cold cathode tubes may be used in mixture, hot cathode tubes and LEDs may be used in mixture, or cold cathode tubes and LEDs may be used in mixture, or hot cathode tubes and cold cathode tubes and LEDs may be used in mixture.

(24) In the foregoing embodiments, the dots of the dot pattern constituting the light reflecting portion of the diffuser plate are formed in a round shape. However, the shape of the dots is not limited to this, and any shape can be selected such as an oval shape or a polygonal shape.

(25) In the foregoing embodiments, the light reflecting portion is formed by means of printing on the surface of the diffuser plate. Besides, the invention also includes an arrangement using any other formation means, for example, metal vapor deposition.

(26) In the foregoing embodiments, the in-plane light reflectance of the diffuser plate is adjusted by forming the light reflecting portion on the surface of the diffuser plate. Alternatively, the light reflectance of the diffuser plate may be adjusted in a manner as described below, for example. The diffuser plate is generally configured such that light scattering particles are dispersed in a light transmissive substrate. Accordingly, the light reflectance of the diffuser plate itself can be determined by the ratio of mixture of light scattering particles (weight %) in the light transmissive substrate. Specifically, the light reflectance can be made relatively large by making relatively large the ratio of mixture of the light scattering particles, and the light reflectance can be made relatively small by making relatively small the ratio of mixture of the light scattering particles.

(27) In the foregoing embodiments, the light reflectance of the diffuser plate is designed and controlled by changing the areas of the dots constituting the light reflecting portion. Besides, the invention also includes an arrangement where the light reflectance is controlled by changing space between dots of the same areas, or by forming dots different in light reflectance, or the like. In relation to the foregoing, dots different in light reflectance can be formed using a plurality of materials different in light reflectance.

(28) In the foregoing embodiments, the light reflecting portion is formed on the diffuser plate of the optical member, and the light reflectance on the light reflecting portion is controlled as appropriate. Besides, the invention also includes an arrangement where the light reflecting portion is formed on the optical member other than the diffuser plate, and the light reflectance on the thus formed light reflecting portion is controlled as appropriate. In addition, the numbers and kinds of the diffuser plate and the optical sheet as optical members can be changed as appropriate.

(29) The screen size, aspect ratio, and the like of the liquid crystal display device can be changed as appropriate, besides those in the foregoing embodiments.

(30) In the foregoing embodiments, the liquid crystal panel and the chassis are placed in portrait orientation with the shorter side aligned to the vertical direction. Besides, the invention also includes an arrangement where the liquid crystal panel and the chassis are placed in portrait orientation with the longer side aligned to the vertical direction.

(31) In the foregoing embodiments, TFTs are used as a switching component of the liquid crystal display device. Besides, the invention is also applicable to other liquid crystal display devices using a switching component other than TFTs (thin-film diodes (TFDs), for example). In addition, the invention is also applicable to both liquid crystal display devices of color representation and liquid crystal display devices of black and white representation.

(32) In the foregoing embodiments, the liquid crystal display device uses the liquid crystal panel as a display panel. Besides, the invention is also applicable to display devices using any other kind of display panel.

(33) In the foregoing embodiments, the television receiver includes a tuner. Besides, the invention is also applicable to display devices not including a tuner.

EXPLANATION OF SYMBOLS

10: Liquid crystal display device (Display device)
11: Liquid crystal panel (Display panel)
12: Backlight unit (Lighting device)
14, 214, and 714: Chassis
14a, 214a, and 714a: Bottom plate
14b and 214b: Side plate
14c: Receiving plate
14A: First end portion
14B: Second end portion
14C: Central portion
15: Optical member
17: Hot cathode tube (Light source)
20, 320, 420, and 620: Reflection sheet (Reflection member)
20a, 320a, 420a, and 620a: Bottom portion
20b, 320b, 420b, and 620b: Rising portion
20c: Extending portion
25, 325A, 325B, 425, and 625: First rising portion (Rising portion)
26, 326A, 326B, 426, and 626: Second rising portion (Rising portion)
27: Third rising portion (Rising portion)
30: Diffuser plate (Optical member)
31: Optical sheet (Optical member)
32: Light reflecting portion
32a: Dot
40: Holddown member
44: Pressing surface
45: Support member
50: Cold cathode tube (Light source)
60: LED (Light source)
70: Bottom portion
71: Rising portion
72: First rising section (Rising portion)
73: Second rising section (Rising portion)
320bA: Longer-side rising section (Rising portion)
320bB: Shorter-side rising section (Rising portion)
BP1: Base end position (Base end position of first rising section)
BP2: Base end position (Base end position of second rising section)
DA: Light source overlapping area (Area overlapping light source arranged region)
DN: Light source non-overlapping area (Area overlapping light source non-arranged region)
EP1: Distal end (Distal end of first rising section)
ES: Light-emitting surface
HW: Half-value width region (Area having light reflectance Rb in a range expressed by inequality (2))
LA: Light source arranged region
LN: Light source non-arranged region
NHW: Non-half-value width region (Area having light reflectance Ra in a range expressed by inequality (1))
TV: Television receiver
$\theta 1$: Angle (between first rising section and the bottom plate)
$\theta 2$: Angle (between second rising section the optical member)

**Claims**

1. A lighting device comprising:

   a light source;
   a chassis including a bottom plate disposed on a side opposite to a light output side with respect to the light source, the chassis storing the light source;
   an optical member disposed on the light output side with respect to the light source; and
   a reflection member disposed in the chassis, the reflection member including a rising portion rising from a side close to the bottom plate toward a side close to the optical member and being configured to reflect light, the rising portion being formed to rise stepwise and including at least a first rising section and a second rising section, the first rising section including a base end on the bottom plate, the second rising section including a distal end reaching the optical member, the second rising section and the optical member form an angle larger than an angle formed by the first rising section and the bottom plate.

2. The lighting device according to claim 1, wherein the distal end of the first rising section of the rising portion and the base end of the second rising section of the rising portion are connected to each other.

3. The lighting device according to claim 1 or 2, wherein:

the chassis has an area opposed to the optical member, the area including a light source arranged region where the light source is disposed and a light source non-arranged region where the light source is not disposed; and at least the second rising section of the rising portion is disposed in the light source non-arranged region.

4. The lighting device according to claim 3, wherein:

the reflection member has a bottom portion disposed along the bottom plate and at least partly located in the light source arranged region; and the first rising section rises from the bottom portion toward the optical member.

5. The lighting device according to claim 4, wherein the base end of the first rising section rising from the bottom portion is located in the light source non-arranged region.

6. The lighting device according to claim 5, wherein the light source has a light-emitting surface for emitting light, and the bottom portion is disposed so as to be opposed to the light-emitting surface.

7. The lighting device according to any one of claims 3 to 6, wherein the first rising section and the second rising section are formed such that space between the first rising section and the optical member and space between the second rising section s and the optical member decreases as distances from the light source increase.

8. The lighting device according to claim 7, wherein the first rising section and the second rising section are sloped.

9. The lighting device according to claim 7 or 8, wherein the angle between the first rising section and the bottom plate is an acute angle, and the angle between the second rising section and the optical member is an acute angle.

10. The lighting device according to any one of claims 3 to 6, wherein:

the first rising section is sloped such that the space between the first rising section and the optical member decreases as the distance from the light source increases; and the angle between the first rising section and the bottom plate is an acute angle, and the angle between the second rising section and the optical member is a substantially right angle.

11. The lighting device according to any one of claims 3 to 10, wherein the chassis has a rectangular shape in a plan view, and the light source extends along a long side of the chassis, and the light source arranged region and the light source non-arranged region are aligned along a short side of the chassis.

12. The lighting device according to any one of claims 1 to 11, wherein the reflection member has a white surface.

13. The lighting device according to any one of claims 1 to 12, wherein the reflection member is a reflection sheet provided separately from the chassis and placed in the chassis.

14. The lighting device according to claim 13, wherein the reflection sheet is made of foamed PET.

15. The lighting device according to claim 13 or 14, further comprising a holddown member, wherein:

the reflection sheet has a bottom portion along the bottom plate; and the holddown member is arranged so as to cross the bottom portion and at least the first rising section of the rising portion, the holddown member having a pressing surface pressing the bottom portion and at least the first rising section of the rising portion from the optical member side.

16. The lighting device according to any one of claims 13 to 15, wherein:

the reflection sheet has a bottom portion along the bottom plate;
the chassis further includes a side plate and a receiving plate, the side plate rising from an edge of the bottom plate toward the optical member, the receiving plate jutting outward from a distal end of the side plate; and
the reflection sheet further includes an extending portion extending from a distal end of the second rising section along the receiving plate at the distal end.

17. The lighting device according to any one of claims 13 to 16, further comprising a support member supporting the rising portion from the bottom plate side, the support member being arranged between the bottom plate and the rising portion.

18. The lighting device according to any one of claims 1 to 12, wherein the reflection member is integrally provided with the chassis.

19. The lighting device according to claim 18, wherein the chassis is made of polycarbonate.

20. The lighting device according to any one of claims 1 to 19, wherein:

the chassis has an area opposed to the optical member, the area including the light source arranged region where the light source is disposed and the light source non-arranged region where the light source is not disposed;
the optical member includes an area overlapping the light source arranged region and an area overlapping the light source non-arranged region, at least a surface of the optical member opposed to the light source in the area overlapping the light source arranged region having light reflectance higher than that of at least a surface of the optical member opposed to the light source in the area overlapping the light source non-arranged region; and
the base end of the second rising section is arranged so as to overlap an area of the optical member having light reflectance in a range expressed by inequality (1)

$$(Rmax - Rmin)/2 + Rmin > Ra \qquad ... \text{Inequality (1)}$$

where Rmax is a maximum value of the light reflectance of the surface of the optical member opposed to the light source, Rmin is a minimum value of the light reflectance of the surface of the optical member opposed to the light source, and Ra is the light reflectance of the area of the optical member.

21. The lighting device according to claim 20, wherein the distal end position of the first rising section is arranged so as to overlap an area of the optical member having light reflectance in a range expressed by inequality (1), and the base end position of the first rising section is arranged so as to overlap an area of the optical member having light reflectance in a range expressed by inequality (2):

$$(Rmax - Rmin)/2 + Rmin < Rb \qquad ... \text{Inequality (2)}$$

where Rb is the light reflectance of the area of the optical member with which the base end of the first rising section overlaps.

22. The lighting device according to any one of claims 1 to 21, wherein:

the chassis has an area opposed to the optical member, the area including at least a first end section, a second end section arranged opposite to the first end section, and a central section between the first end section and the second end section , the central portion being a light source arranged region where the light source is disposed, and the first end section and the second end section being light source non-arranged regions where the light source is not disposed; and

the optical member includes an area overlapping the light source arranged region and an area overlapping the light source non-arranged region, at least a surface of the optical member opposed to the light source in the area overlapping the light source arranged region having light reflectance higher than that of at least a surface of the optical member opposed to the light source in the area overlapping the light source non-arranged region.

23. The lighting device according to claim 22, wherein the rising portion is arranged close to each of the first end section and the second end section.

24. The lighting device according to any one of claims 20 to 23, wherein the light reflectance of at least the surface of the optical member opposed to the light source decreases as a distance from the light source increases.

25. The lighting device according to any one of claims 20 to 24, wherein the surface of the optical member opposed to the light source has a light reflecting portion configured to reflect light.

26. The lighting device according to claim 25, wherein the light reflecting portion includes a large number of light reflective dots arranged within the surface of the optical member close to the light source, each of the light reflective dots having a substantially round shape.

27. The lighting device according to any one of claims 1 to 26, wherein the light source is a hot cathode tube.

28. The lighting device according to any one of claims 1 to 26, wherein the light source is a cold cathode tube.

29. The lighting device according to any one of claims 1 to 26, wherein the light source is an LED.

30. A display device, comprising:

> the lighting device according to any one of claims 1 to 29; and
> a display panel configured to provide display using light from the lighting device.

31. The display device according to claim 30, wherein the display panel is a liquid crystal panel including liquid crystal sealed between a pair of substrates.

32. A television receiver comprising the display device according to claim 30 or 31.

EP 2 479 477 A1

FIG.1

TV

10

Cb

Ca

P

T

S

34

# FIG.2

# FIG.3

EP 2 479 477 A1

# FIG.4

EP 2 479 477 A1

# FIG.5

EP 2 479 477 A1

# FIG.6

EP 2 479 477 A1

# FIG.7

30 (15)  30a  32

NHW

DN

DA

DN

NHW

HW

Y

X

EP 2 479 477 A1

# FIG.8

## FIG.9

FIG.10

# FIG.11

POSITION ALONG Y-AXIS DIRECTION

FIG.12

# FIG.13

EP 2 479 477 A1

FIG.14

# FIG.15

FIG.16

FIG.17

FIG.18

## FIG.19

FIG.20

320bB (320b)

320bA (320b)

326B    325B

326A    325A

xxi

14

xxii

xxii

Y

X

xxi

326A    325A

320bA (320b)

320a
(320)

325B    326B

320bB (320b)

EP 2 479 477 A1

# FIG.21

EP 2 479 477 A1

FIG.22

EP 2 479 477 A1

# FIG.23

EP 2 479 477 A1

FIG.24

# FIG.25

EP 2 479 477 A1

**FIG.26**

## FIG.27

EP 2 479 477 A1

## FIG.28

EP 2 479 477 A1

# FIG.29

EP 2 479 477 A1

FIG.30

# FIG.31

EP 2 479 477 A1

**INTERNATIONAL SEARCH REPORT**

| International application No. |
|---|
| PCT/JP2010/063977 |

A. CLASSIFICATION OF SUBJECT MATTER
*F21S2/00*(2006.01)i, *G02F1/13357*(2006.01)i, *F21Y103/00*(2006.01)n

According to International Patent Classification (IPC) or to both national classification and IPC

B. FIELDS SEARCHED

Minimum documentation searched (classification system followed by classification symbols)
F21S2/00, G02F1/13357, F21Y103/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-174910 A  (AU Optronics Corp.),<br>30 June 2005 (30.06.2005),<br>entire text; all drawings<br>& US 2005/0122444 A1    & CN 1560683 A | 1,2,27-32<br>3-19,22-26<br>20,21 |
| Y | JP 2004-227991 A  (Koichi MATSUI),<br>12 August 2004 (12.08.2004),<br>entire text; all drawings<br>(Family: none) | 3-19,22-26 |
| Y | JP 2002-196326 A  (Hitachi, Ltd.),<br>12 July 2002 (12.07.2002),<br>fig. 2<br>(Family: none) | 10 |

[X] Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 November, 2010 (08.11.10) | Date of mailing of the international search report<br>16 November, 2010 (16.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/063977

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2007-73374 A (Sharp Corp.), 22 March 2007 (22.03.2007), paragraphs [0027], [0028]; fig. 1 (Family: none) | 12-15 |
| Y | JP 2008-204818 A (Sharp Corp.), 04 September 2008 (04.09.2008), paragraph [0025]; fig. 1 (Family: none) | 16 |
| Y | JP 2007-86195 A (Toshiba Matsushita Display Technology Co., Ltd.), 05 April 2007 (05.04.2007), fig. 6 & US 2007/0064408 A1 | 17 |
| Y | WO 2009/066487 A1 (Sharp Corp.), 28 May 2009 (28.05.2009), paragraph [0035] (Family: none) | 18,19 |
| Y A | JP 2005-117023 A (Sony Corp.), 28 April 2005 (28.04.2005), paragraphs [0036], [0093] to [0104]; fig. 13 (Family: none) | 22-26 20,21 |

Form PCT/ISA/210 (continuation of second sheet) (July 2009)

**EP 2 479 477 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006146126 A